# EUROPÄISCHE PATENTANMELDUNG

(11) **EP 3 955 184 A1**
(43) Veröffentlichungstag der Anmeldung: **16.02.2022**
(21) Anmeldenummer: 20190371.3
(22) Anmeldetag: 10.08.2020
(51) Int. Cl.: G06Q 10/06, G06Q 50/08, G06Q 50/16, G06Q 50/18

(54) **SYSTEM ZUR AUTOMATISIERTEN PLANUNG UND/ODER GENEHMIGUNG EINES GEBÄUDES SOWIE VERFAHREN ZUM BETRIEB DES SYSTEMS**

(71) Anmelder: Swiss Property AG, 8045 Zürich (CH)
(72) Erfinder: Steinbrecher, Markus, 8045 Zurich (CH); Vogler, Manuel, 8045 Zurich (CH); May, Johannes, 8045 Zurich (CH); Staub, Ralf, 8045 Zurich (CH)
(74) Vertreter: DTS Patent- und Rechtsanwälte Schnekenbühl und Partner mbB

(57) **Zusammenfassung**

Die vorliegende Erfindung betrifft ein System (100; 200) zur automatisierten Planung und/oder Genehmigung wenigstens eines Gebäudes, aufweisend wenigstens ein Eingabemodul (210) zur Eingabe von Daten betreffend das Gebäude und/oder Bestandteile des Gebäudes, wenigstens ein Ausgabemodul (212) zur Ausgabe von Daten betreffend das Gebäude und/oder Bestandteile des Gebäudes, eine Servereinheit (214), auf der Daten betreffend das Gebäude und/oder die Bestandteile des Gebäudes vorgehalten werden, und ein Berechnungsmodul (216), das derart beschaffen ist, dass mittels des Berechnungsmoduls (216) Planungs- und/oder Genehmigungsdaten des Gebäudes automatisch berechenbar sind auf der Grundlage von Daten betreffend des das Gebäudes und/oder der die Bestandteile des Gebäudes.

## Beschreibung

Die vorliegende Erfindung betrifft ein System zur automatisierten Planung und/oder Genehmigung eines Gebäudes. Sie betrifft ferner ein Verfahren zur automatisierten Planung und/oder Genehmigung eines Gebäudes.

Bei der Planung von Gebäuden wird bereits eine Vielzahl digitale Systeme eingesetzt. Diese betreffen insbesondere Konstruktionssysteme oder auch Simulationssysteme zum Energieverbrauch, aber auch zu Personenströmen durch das Gebäude (insbesondere im öffentlichen Raum), zum Thema Brandbekämpfung oder betreffend die Evakuierung von Gebäuden.

Im Zusammenhang mit der Genehmigung von Gebäuden werden mittlerweile auch verstärkt die Energieeffizienz der Gebäude und der Energieverbrauch beleuchtet.

Es ist für die Genehmigung von Gebäuden unerlässlich, die entsprechend geforderten Energienachweise zu berechnen und zu erbringen.

Derzeit ist dies jedoch sehr aufwendig, da umfangreiche Berechnungen angestellt werden müssen und dann manuell aus diesen Berechnungen die entsprechenden Genehmigungsunterlagen zusammengestellt werden müssen.

Aus der EP 2 182 336 A2 ist ein Verfahren zur Bereitstellung von Vergleichsdaten für eine Bewertung energetischer Eigenschaften und/oder Energiekosten eines Gebäudes bekannt.

Die DE 10 2017 209 084 A1 offenbart ein Verfahren zur Verbesserung einer Energieeffizienz eines in Planung befindlichen Gebäudes. Das Verfahren weist die folgenden Schritte auf: Bereitstellen eines digitalen Grundmodells des Gebäudes mittels einer Recheneinheit, Festlegen einer Mehrzahl unterschiedlicher funktionsbezogener Raumkategorien mittels der Recheneinheit, Zuordnen bestehender technischer Gebäudeautomationsfunktionen, die in einer mit der Recheneinheit gekoppelten Speichereinheit gespeichert sind, zu den unterschiedlichen Raumkategorien mittels der Recheneinheit, Anordnen von funktionsbezogenen Räumen im digitalen Grundmodell des Gebäudes durch Zuordnen der festgelegten funktionsbezogenen Raumkategorien zum digitalen Grundmodell des Gebäudes auf Basis eines Belegungsplans des Gebäudes mittels der Recheneinheit, virtuelles Koppeln der funktionsbezogenen Räume mit Versorgungssträngen eines virtuellen Gebäudeautomationssystems auf Basis der zugeordneten technischen Gebäudeautomationsfunktionen mittels der Recheneinheit, Bestimmen einer Energieeffizienz des virtuellen Gebäudes auf Basis der mit den Versorgungssträngen gekoppelten funktionsbezogenen Räume mittels der Recheneinheit, und Auswahl geeigneter Anlagentechnikmodule für die Gebäudeautomation aus einer in einer Speichereinheit gespeicherten Liste verfügbarer Anlagentechnikmodule auf Basis der bestimmten Energieeffizienz und der mit den Versorgungssträngen gekoppelten funktionsbezogenen Räume mittels der Recheneinheit. Ferner betrifft die darin beschriebene Erfindung ein System zur Verbesserung einer Energieeffizienz eines in Planung befindlichen Gebäudes.

Es ist die Aufgabe der vorliegenden Erfindung, ein System der eingangs genannten Art in vorteilhafter Weise weiter zu bilden, insbesondere dahingehend, dass Genehmigungsverfahren von Gebäuden vereinfacht und insgesamt effizienter gestaltet werden können.

Diese Aufgabe wird erfindungsgemäß gelöst durch ein System mit den Merkmalen des Anspruchs 1. Demnach weist das System zur automatisierten Planung und/oder Genehmigung wenigstens eines Gebäudes wenigstens ein Eingabemodul zur Eingabe von Daten betreffend ein Gebäude und/oder Bestandteile eines Gebäudes auf. Es weist ferner wenigstens ein Ausgabemodul zur Ausgabe von Daten betreffend das Gebäude und/oder die Bestandteile des Gebäudes, eine Servereinheit, auf der Daten betreffend das Gebäude und/oder die Bestandteile des Gebäudes vorgehalten werden, sowie ein Berechnungsmodul auf, das derart beschaffen ist, dass mittels des Berechnungsmoduls Planungs- und/oder Genehmigungsdaten des Gebäudes automatisch berechenbar sind auf der Grundlage von Daten betreffend das Gebäude und/oder die Bestandteile des Gebäudes.

Die Erfindung basiert auf dem Grundgedanken, die Erfassung und Verarbeitung der im Planungs- und/oder Genehmigungsverfahren notwendigen Daten zu einem möglichst hohen Grad zu automatisieren und die hierbei relevanten Parameter des Gebäudes direkt zu bestimmen. Hierdurch wird eine besonders effiziente Arbeitsweise erreicht und es wird vermieden, dass Daten mehrfach eingegeben werden müssen. Auch kann vermieden werden, dass bereits vorhandene Daten manuell extrahiert oder in sonstiger Form erneut aus den Plänen herausgelesen werden müssen, um z.B. Formulare in elektronischer Form und/oder Papierform auszufüllen. Ferner werden die Planungs- und/oder Genehmigungsdaten so bereitgestellt, dass sie unmittelbar im Planungsprozess berücksichtigt und möglichst direkt einer relevanten Behörde zur Verfügung gestellt werden können. Dabei werden zudem planungs- und/oder genehmigungsrelevante Aspekte des Gebäudes und/oder seiner Bestandteile direkt erkannt und es können Maßnahmen zur Behandlung von potentiellen Problemen initiiert werden.

Insbesondere kann es sich bei den mittels des Eingabemoduls erfassten Daten betreffend das Gebäude und/oder betreffend Bestandteile des Gebäudes um Eingabedaten handeln. Ferner kann es sich bei den mittels des Ausgabemoduls ausgebbaren Daten betreffend das Gebäude und/oder betreffend Bestandteile des Gebäudes um Ausgabedaten handeln. Ferner kann es sich bei den auf der Servereinheit vorgehaltenen Daten betreffend das Gebäude und/oder betreffend Bestandteile des Gebäudes um Serverdaten handeln.

Bei einer Ausbildung des Systems sind oder umfassen die Planungs- und/oder Genehmigungsdaten Energienachweisdaten des Gebäudes. Dadurch stehen vorteilhafterweise Daten direkt (also insbesondere direkt aus dem System und den dort vorgehaltenen Datensätzen generiert) zur Verfügung, die für das Planungs- und/oder Genehmigungsverfahren besonders relevant sind. Auch dies trägt dazu bei, die Effizienz des Verfahrens zu verbessern und mehrfache Dateneingabe oder auch das Auslesen von Daten zur Erstellung von Genehmigungsdokumenten überflüssig zu machen.

Die Energienachweisdaten werden insbesondere so gebildet, dass sie direkt im Planungs- und/oder Genehmigungsverfahren verwendet werden können. Hierzu werden die für den von einer Behörde geforderten Daten für den Energienachweis vollständig ermittelt und bereitgestellt.

Bei einer weiteren Ausbildung weist das System ein Authentifizierungsmodul auf, mittels dessen die Planungs- und/oder Genehmigungsdaten lückenlos nachvollziehbar und manipulationssicher bereitstellbar sind. Dadurch werden die bereitgestellten Daten vorteilhafterweise gegen Manipulationen geschützt. Die Daten sind dann besonders vertrauenswürdig.

Dabei können an sich bekannte Verfahren genutzt werden, bei denen etwa der Zugriff - insbesondere der Schreibzugriff - auf die für das Planungs- und/oder Genehmigungsverfahren relevanten Daten beschränkt wird und/oder Änderungen nachvollziehbar und sicher dokumentiert werden.

Zum Beispiel kann ein Verfahren aus dem Bereich der *Distributed-Ledger-Technologie* (DLT) eingesetzt werden, etwa ein Blockchain-Verfahren, um die Integrität der Daten und die Nachvollziehbarkeit vorangegangener Änderungen kryptografisch zu sichern. Neben Blockchain sind alternativ oder zusätzlich als DLT Verfahren auch Verfahren wie IOTA oder Hashgraph zu nennen. Weitere Beispiele sind Ethereum, Hyperledger, Corda, Openchain, BigChainDB etc.

Der Begriff Distributed-Ledger-Technologie (DLT) bezeichnet dabei eine Technik, die für die Dokumentation bestimmter Transaktionen benutzt wird. Im Gegensatz zum klassischen Ansatz, bei dem ein Hauptbuch (ledger) in der Regel von nur einer Instanz verwaltet wird, werden bei DLT dezentral und beliebig viele prinzipiell gleichgestellte Kopien des Ledgers von unterschiedlichen Parteien unterhalten. Durch geeignete Maßnahmen wird dafür gesorgt, dass neu hinzuzufügende Transaktionen in allen Kopien des Ledgers übernommen werden und dass es zu einer Übereinkunft (Konsensus) über den jeweils aktuellen Stand des Ledgers kommt.

Die DLTs unterscheiden sich beispielsweise durch die Art, wie die vernetzten Computer zu einer Vereinbarung kommen (d.h. die Konsensusprotokolle), etwa durch proof of work wie in Bitcoin, durch den Nachweis ökonomischer Interessen (proof of stake, wie in Ethereums Casper), durch einen Koordinator wie in Raft oder durch Wahlen wie in Swirlds.

Es gibt öffentliche DLTs (jeder kann sich am Netzwerk beteiligen und die Daten einsehen) und private DLTs (die nur einem begrenzten Kreis Zugang und Beteiligung gewähren)

Bei einer Weiterbildung weist das System eine Schnittstelle zu einer Genehmigungsbehörde auf, wobei die Schnittstelle derart beschaffen ist, dass sie einen sicheren Austausch von Daten betreffend des Gebäudes und/oder der Bestandteile des Gebäudes ermöglicht. Das Planungs- und/oder Genehmigungsverfahren kann dadurch vorteilhafterweise besonders effizient durchgeführt werden, indem die relevanten Daten den betreffenden Behörden effizient, strukturiert und sicher zur Verfügung gestellt werden. Der Begriff sicher umfasst dabei nicht nur sichere Authentifizierung des autorisierten Nutzers, es kann auch insgesamt aufgrund der Struktur und Beschaffenheit gewährleistet werden, dass eine manipulationssichere Verbindung, insbesondere in Verbindung mit DLT, bereitgestellt wird. Dies erleichtert den Rechtsverkehr mit den Behörden und ermöglicht eine schnelle und einfache Bearbeitung sowohl auf Antragstellerseite als auch auf Behördenseite.

Beispielsweise kann die Schnittstelle zur Verwendung an sich bekannter Protokolle zur sicheren Datenkommunikation eingerichtet sein, insbesondere zur kryptografischen Absicherung der Kommunikation, etwa durch Verschlüsselung und/oder Signieren von ausgetauschten Daten. Insbesondere ist dabei eine Ende-zu-Ende-Verschlüsselung von Daten zwischen dem System und der Genehmigungsbehörde vorgesehen. Der sichere Datenaustausch erfolgt dabei so, dass die übertragenen Daten gegen Lesen und/oder Verändern durch Unbefugte geschützt sind, etwa um die Vertraulichkeit der Kommunikation und/oder die Integrität der übertragenen Daten sicherzustellen.

Auch für den sicheren Austausch von Daten kann ein Distributed-Ledger-Verfahren, insbesondere ein Blockchain-Verfahren, genutzt werden. Insbesondere wird auch hier durch kryptografische Verfahren sichergestellt, dass die Kommunikation sicher und vertrauenswürdig abläuft.

Es können vorgegebene Behördenschnittstellen genutzt werden, um zumindest zeitweise eine datentechnische Verbindung zwischen der Schnittstelle des Systems und der Behörde herzustellen.

Bei einer Ausbildung weist das System ein Energienachweiserzeugungsmodul auf, das derart beschaffen ist, dass es auf der Grundlage der vom Berechnungsmodul berechneten und/oder bereitgestellten Daten automatisch einen Energienachweis für das Gebäude erstellt. Dies beschleunigt vorteilhafterweise das Planungs- und/oder Genehmigungsverfahren.

Insbesondere kann das Genehmigungsverfahren auch auf der Behördenseite zumindest teilweise automatisiert ablaufen und das System kann mittels einer Schnittstelle den Genehmigungsprozess initiieren beziehungsweise die relevanten Daten zur Verfügung stellen.

Bei einer weiteren Ausbildung weist das System wenigstens ein Energieverbrauchsberechnungsmodul auf, mittels dessen der Energieverbrauch des Gebäudes berechenbar ist, insbesondere unter Einbeziehung der Daten betreffend das Gebäude und/oder Bestandteile des Gebäudes. Die dabei vorteilhafterweise besonders frühzeitig erfassten Daten sind hochrelevant für das folgende Planungs- und/oder Genehmigungsverfahren.

Insbesondere kann es sich bei den hier verwendeten Daten betreffend das Gebäude und/oder Bestandteile des Gebäudes um von dem Eingangsmodul erfasste, von dem Ausgabemodul ausgegebene und/oder auf dem Servermodul vorgehaltene Daten betreffend das Gebäude und/oder Bestandteile des Gebäudes handeln.

Dabei kann beispielsweise eine Anwendung betreffend den Energieverbrauch genutzt werden, beispielsweise Enerweb, wobei die Anwendung in das System integriert sein oder mittels einer Schnittstelle des Systems auf die Anwendung zugegriffen werden kann.

Bei einer Weiterbildung weist das System wenigstens ein Konstruktionsmodul auf und/oder es ist mit wenigstens einem Konstruktionsmodul verbindbar. Dadurch können die im Planungs- und/oder Genehmigungsverfahren relevanten Daten vorteilhafterweise in einem besonders frühen Stadium erfasst werden. Ferner können nötigenfalls kritische Parameter besonders früh erkannt und angepasst werden.

Die bei der Konstruktion vorgegebenen Parameter spielen eine besonders große Rolle bei der Bestimmung von Daten für das Planungs- und/oder Genehmigungsverfahren. Bei den hier vorgegebenen Rahmenbedingungen und Parameter kann durch das System erkannt werden, welche kritischen oder genehmigungsrelevanten Größen angepasst oder geändert werden sollten und gegebenenfalls notwendige Änderungen können frühzeitig vorgenommen werden.

Bei einer Ausbildung weist das System wenigstens ein Plausibilitätsmodul auf, das auf der Grundlage von Plausibilitätsdaten, die im Plausibilitätsmodul eingespeichert sind, die seitens des Berechnungsmoduls berechneten Daten auf Plausibilität überprüft. Dadurch wird vorteilhafterweise besonders schnell festgestellt, ob die vorliegenden Daten zur Verwendung im Planungs- und/oder Genehmigungsverfahren geeignet sind.

Bei der Prüfung der Plausibilität können beispielweise Schwellenwerte für bestimmte Parameter bestimmt werden, die von den Daten betreffend das Gebäude und/oder Bestandteile des Gebäudes umfasst sind. Bei einer Abweichung der Parameter über die Schwellenwerte hinaus kann eine Warnung für einen Nutzer des Systems ausgegeben werden, es können mögliche Änderungsvorschläge ausgegeben werden oder das Planungs- und/oder Genehmigungsverfahren kann unterbrochen werden.

Bei einer Weiterbildung ist das Plausibilitätsmodul selbstlernend ausgebildet. Dadurch kann die Plausibilitätsprüfung vorteilhafterweise besonders einfach und umfassend ausgebildet werden.

Dabei können verschiedene an sich bekannte Selbstlernverfahren angewandt werden, etwa aus dem Bereich der künstlichen Intelligenz und/oder des Maschinenlernens. Beispielsweise können neuronale Netze verwendet werden.

Bei dem selbstlernenden Verfahren können in einer Lernphase Daten aus abgeschlossenen Planungs- und/oder Genehmigungsverfahren genutzt werden.

Ferner ist ein Verfahren zum Betrieb eines Systems gemäß der vorliegenden Anmeldung zur automatisierten und/oder teilautomatisierten Genehmigung und/oder Teilgenehmigung eines Gebäudes vorgesehen. Das Verfahren weist die gleichen Vorteile auf wie das System, zu dessen Betrieb es eingerichtet ist.

Ferner ist eine Verwendung eines Systems gemäß der vorliegenden Anmeldung zur automatisierten und/oder teilautomatisierten Genehmigung und/oder Teilgenehmigung eines Gebäudes vorgesehen. Diese Verwendung weist die gleichen Vorteile auf wie das System beziehungsweise wie das Verfahren zum Betreiben des Systems.

Nachfolgend werden verschiedene Ausführungsbeispiele des Systems und Verfahrens erläutert.

Bei einem Ausführungsbeispiel ist ein zentrales Produkt-Repository (englisch: *Adaptable Product System;* APS) vorgesehen. Dieses erlaubt es, Informationen zu Bestandteilen eines Gebäudes an zentraler Stelle zu speichern, insbesondere im Sinne eines *"Single Source of Truth"-* Konzepts (SSOT). Dabei werden Daten aus unterschiedlichen Softwarelösungen von Fachexperten verknüpft, etwa von einem Architekten oder einem Bauingenieur. Es erlaubt insbesondere das Speichern der in den Anwendungsfällen benötigten Informationen, etwa Preis oder Dämmwert.

-Dabei ist insbesondere die Einführung von Produkthierarchien vorgesehen. Das APS erlaubt dabei die Kombination einzelner Elemente durch definierte Hierarchien. Einzelne Elemente können beispielsweise zu Modulen und Module zu Produkten zusammengefasst werden. Der Aufbau der Hierarchien ist durch den Anwender frei definierbar, siehe das unten beschriebene Metamodell.

Das APS stellt ferner ein Regelwerk zur Verfügung, das es ermöglicht, geschäftliche Vorgaben (*Business Rules*) durch mathematische Formeln zu beschreiben und auf die Elemente, Module und Produkte des Produkt-Repository anzuwenden. Das Regelwerk enthält insbesondere auch Regeln, die für definierte Anwendungsfälle relevant sind, etwa für einen Energienachweis oder für Brandschutzbestimmungen.

Ferner werden dynamische Datenstrukturen ermöglicht. Elemente, Module oder Produkte haben definierte Attribute, etwa einen bestimmten Preis oder Dämmwert, und Beziehungen. Die Attribute und Beziehungen können ohne Anpassung des Softwarecodes oder der Datenbankstruktur geändert werden. Das heißt, Attribute wie eine Farbe können durch den Anwender auch ohne Mitwirkung eines Software-Entwicklers definiert werden. Dafür stellt das APS eine geeignete Datenbankstruktur bereit, die es erlaubt Datenobjekte, -attribute und -beziehungen durch ein Metamodell zu steuern. Wird ein neues Objekt, Attribut oder eine neue Beziehung durch den Anwender definiert, so ergänzt die Software das Metamodell. Weitergehende, insbesondere manuell vorzunehmende, Anpassungen am Software-Code oder in der Datenbankstruktur sind nicht nötig.

Ferner werden eine verbesserte Spezifikation und Regeln für die Adaptierbarkeit des Systems bereitgestellt. Das APS ermöglicht das Speichern von Spezifikationen der Elemente, Module und Produkte, etwa allgemeine Eigenschaften eines Wand-Moduls, und es ermöglicht das Speichern von Instanzen dieser Spezifikationen, beispielsweise die Repräsentation der tatsächlich verbauten Wand in einem Bauprojekt. In den Spezifikationen sind auch Regeln beschrieben, die definieren, wie und unter welchen Voraussetzungen Elemente des Produkt-Repository miteinander kombiniert werden können. Diese Regeln definieren insbesondere auch, ob und in welcher Weise Elemente verändert werden können, etwa wie Breite, Höhe und Tiefe eines Wandmoduls durch den Architekten in der CAD-Software angepasst werden können.

Ferner werden Standards besser genutzt und eine verbesserte Kompatibilität des Systems wird ermöglicht. Die Datenstrukturen des APS nutzen bestehende Industriestandards (z.B. Industry Foundation Classes, IFC), bestehende Vorgaben, Richtlinien und Gesetze (z.B. für Energienachweise) und ergänzen und Verknüpfen diese Datenstrukturen, um das eingangs beschriebene zentrale Repository zu ermöglichen. Durch das oben beschriebe Metamodell ist eine Anpassung dieser Standards möglich, ohne dass dafür der Software-Code angepasst werden muss.

Nachfolgend werden Aspekte der Integration des Systems erläutert.

Das System stellt Schnittstellen zur Verfügung zwischen a) den durch die Fachexperten genutzten Software-Lösungen (z.B. Archicad), b) dem zentralen Repository des APS und c) einem System Dritter (z.B. Behörden). Der Datenaustausch erfolgt entweder durch Dateiexport und -import, teilweise manuell durch den Anwender oder automatisiert durch bidirektionale Schnittstellen.

Um ein *"Extract, Transform, Load"* (ETL) zu ermöglichen, stellt das System geeignete Verfahren bereit, mit denen Daten aus einer Quelle extrahiert, übersetzt und in ein Zielsystem geladen werden können.

Ferner kann ein *"APS Matching"* durchgeführt werden. Für eine Effizienzsteigerung der Anwendungsfälle ermöglicht die Integration insbesondere eine geeignete Erkennung der Daten aus den Software-Lösungen der Fachexperten (z.B. Daten aus dem 3D-Modell des Architekten) und eine Zuordnung zu Elementen, Modulen und Produkten des APS. Dadurch können z.B. alle Elemente des 3D-Modells automatisiert mit Informationen zu Dämmwerten aus dem APS angereichert werden.

Bei dem Ausführungsbeispiel werden ferner Dienste mittels künstlicher Intelligenz (*Artificial Intelligence Services*, AI-Services) beziehungsweise mittels Maschinenlernen bereitgestellt.

Dabei wird etwa eine Mustererkennung genutzt. Das System stellt dabei geeignete Verfahren zur Verfügung, die es erlauben aus den bestehenden Daten (z.B. Dokumente wie 2D-/3D-Pläne, IFC-Export, Archicad-Datei) Muster (z.B. Raum, Fenster) zu erkennen. Mithilfe der Informationen aus den Mustern können zusätzliche Informationen abgeleitet werden, etwa eine Raumgrösse oder die Anzahl der Fenster). Die Mustererkennung basiert auf Algorithmen und historisierten Daten.

Ferner können auch Empfehlungen erzeugt und ausgegeben werden. Das System stellt geeignete Verfahren zur Verfügung, die es erlauben mit Hilfe von Algorithmen und historisierten Daten Vorhersagen zu bestimmten Fragestellungen zu treffen und Empfehlungen zu formulieren. Zum Beispiel kann das System den Energieverbrauch ermitteln, mit historisierten Plänen vergleichen und Schwachstellen oder Alternativen aufzeigen.

Das System ist bei dem Beispiel selbstlernend gestaltet, das heißt, es passt die Algorithmen selbständig an und verbessert sie durch neue Informationen.

Das System stellt als Datenbasis einen geeigneten Datenspeicher für die historisierte Ablage aller für die AI-Services benötigten Daten zur Verfügung.

Bei dem Ausführungsbeispiel können ferner sogenannte *"Distributed-Ledger-Technology Services"* (DLT-Services) bereitgestellt werden.

Das System stellt für eine unveränderliche Ablage geeignete Verfahren zur Verfügung, die es erlauben, eine definierte Auswahl von Informationen (z.B. offizielle Dokumente wie einen Bauantrag) derart abzulegen, dass diese praktisch nicht unbemerkt und/oder nicht ohne entsprechende Autorisierung geändert werden können. Dabei kann ferner vorgesehen sein, dass durch eine Autorisierung die jeweils ändernde Person bei jeder Änderung erkennbar ist. Es kann ein DLT-Verfahren, etwa ein Blockchain-Verfahren, und/oder ein anderes kryptografisches Verfahren zur Implementierung genutzt werden.

Das System stellt ein Verfahren zur Verfügung, das es definierten Benutzergruppen erlaubt, Dokumente zu verifizieren und auf ihre Richtigkeit zu prüfen. Zum Beispiel kann der Bauherr prüfen, ob seine lokale Kopie des Architekturplans mit dem gespeicherten Plan im APS übereinstimmt (binäre Prüfung). Auch hier kann ein DLT-Verfahren, etwa ein Blockchain-Verfahren, und/oder ein anderes kryptografisches Verfahren zur Implementierung genutzt werden.

Das Ausführungsbeispiel ermöglicht ferner zertifizierte Produkte und Prüfregeln. Das System stellt dabei ein geeignetes Verfahren zur Verfügung, das es erlaubt, Informationen der im APS definierten Elemente, Module und Produkte unveränderlich zu speichern. Dadurch wird sichergestellt, dass ein Element, Modul oder ein Produkt inklusive aller dafür relevanten Informationen eindeutig identifizierbar ist und die Eigenschaften bekannt sind. Des Weiteren ist es dadurch möglich, dass das Ergebnis einer Prüfung des Elements, Moduls oder Produkts (z.B. aus Sicht des Brandschutzes) unveränderlich gespeichert wird. Die für eine Prüfung erforderlichen Daten und Regeln werden ebenfalls im System definiert (sogenannte *Smart Contracts*) und sind für definierte Benutzergruppen jederzeit ersichtlich und deren Anwendung nachvollziehbar; beispielsweise ist ersichtlich, mit welchen Daten und Regeln die Prüfung eines bestimmten Energienachweises erfolgt ist. Auch hier kann ein DLT-Verfahren, etwa ein Blockchain-Verfahren, und/oder ein anderes kryptografisches Verfahren zur Implementierung genutzt werden.

Weitere Einzelheiten und Vorteile der Erfindung sollen nun anhand eines in der Zeichnung näher dargestellten Ausführungsbeispiels erläutert werden.

### Es zeigen

- Fig. 1: ein erstes Ausführungsbeispiel des Systems sowie des Verfahrens zu seinem Betrieb;
- Fig. 2: ein weiteres Ausführungsbeispiel des Verfahrens zum Betrieb des Systems;
- Fig. 3: ein weiteres Ausführungsbeispiel des Verfahrens zum Betrieb des Systems;
- Fig. 4: ein weiteres Ausführungsbeispiel des Systems und des Verfahrens zu seinem Betrieb;
- Fig. 5: ein Ausführungsbeispiel einer mittels des Systems ausgeführten Mustererkennung;
- Fig. 6: ein weiteres Ausführungsbeispiel des Systems und des Verfahrens zu seinem Betrieb;
- Fig. 7: ein weiteres Ausführungsbeispiel des Systems und des Verfahrens zu seinem Betrieb;
- Fig. 8: ein weiteres Ausführungsbeispiel des Systems und des Verfahrens zu seinem Betrieb;
- Fig. 9: ein weiteres Ausführungsbeispiel des Systems und des Verfahrens zu seinem Betrieb; und
- Fig. 10: ein weiteres Ausführungsbeispiel des Systems und des Verfahrens zu seinem Betrieb.

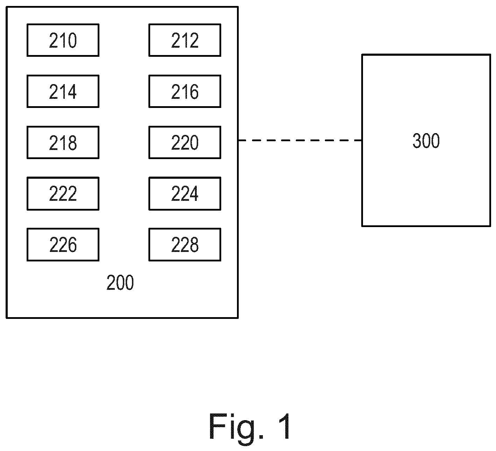

Mit Bezug zu **Fig. 1** wird ein erstes Ausführungsbeispiel des Systems erläutert.

Das System 200 umfasst ein Eingabemodul 210, ein Ausgabemodul 212 und ein Servermodul 214.

Es umfasst bei dem Ausführungsbeispiel ferner ein Berechnungsmodul 216.

Es umfasst bei dem Ausführungsbeispiel ferner ein Authentifizierungsmodul 218.

Es umfasst bei dem Ausführungsbeispiel ferner eine Schnittstelle 220.

Es umfasst bei dem Ausführungsbeispiel ferner ein Energienachweiserzeugungsmodul 222.

Es umfasst bei dem Ausführungsbeispiel ferner ein Energieverbrauchsmodul 224.

Es umfasst bei dem Ausführungsbeispiel ferner ein Konstruktionsmodul 226.

Es umfasst bei dem Ausführungsbeispiel ferner ein Plausibilitätsmodul 228.

Bei dem Ausführungsbeispiel sind die Module 210 bis 228 als Softwaremodule implementiert, die von einer Recheneinheit ausgeführt werden.

Bei weiteren Ausführungsbeispielen können die Module 210 bis 228 zumindest teilweise von anderen Recheneinheiten ausgeführt werden. Insbesondere kann auf einzelne Module 210 bis 228 nach Art einer Cloud-Anwendung zugegriffen werden, wobei die Ausführung des entsprechenden Softwaremoduls bei einem Server erfolgt, mit dem das System 200 in einer datentechnischen Verbindung steht.

Bei dem Ausführungsbeispiel ist eine zentrale Speichereinheit (nicht dargestellt) des Systems 200 vorgesehen, auf die alle Module 210 bis 228 zugreifen können, wobei jedoch eine Rechteverwaltung vorgesehen ist, um einen selektiven Lese- und/oder Schreibzugriff auf einzelne Dateien zu erlauben.

Bei dem Ausführungsbeispiel ist ferner eine Genehmigungsbehörde 300 vorgesehen, die hier von einem externen Server 300 gebildet wird. Zwischen dem System 200 und der Genehmigungsbehörde 300 besteht zumindest zeitweise eine datentechnische Verbindung.

Die datentechnische Verbindung wird bei dem Ausführungsbeispiel über das Internet hergestellt. Bei weiteren Ausführungsbeispielen kann sie jedoch auf andere Weise hergestellt werden, etwa mittels eines anderen lokalen (LAN) oder großräumigen (WAN) Computernetzwerks, über ein Telefonnetzwerk oder ein Mobilfunknetz, oder auf andere Weise.

Mit Bezug zu **Fig. 1** wird ein erstes Ausführungsbeispiel des Verfahrens zum Betreiben des Systems erläutert. Dabei wird dem oben mit Bezug zu **Fig. 1** erläuterten Ausführungsbeispiel des Systems ausgegangen.

Bei dem Ausführungsbeispiel wird durch das Eingabemodul 210 und das Ausgabemodul 212 eine Bedienoberfläche bereitgestellt.

Das Eingabemodul 210 erlaubt dabei die Eingabe von Daten betreffend ein Gebäude und/oder Bestandteile des Gebäudes.

Das Ausgabemodul 212 erlaubt die Ausgabe von Daten betreffend das Gebäude und/oder Bestandteile des Gebäudes, wobei Ausgabedaten erzeugt und mittels einer Anzeigevorrichtung ausgegeben werden, etwa auf einem Monitor.

Auf der Servereinheit 214 werden Daten betreffend das Gebäude und/oder die Bestandteile des Gebäudes vorgehalten.

Das Berechnungsmodul 216 ist dazu eingerichtet, Planungs- und/oder Genehmigungsdaten des Gebäudes automatisch zu berechnen. Dies erfolgt auf der Grundlage von Daten betreffend das Gebäudes und/oder der die Bestandteile des Gebäudes.

Bei dem Ausführungsbeispiel können dabei die Planungs- und/oder Genehmigungsdaten Energienachweisdaten des Gebäudes sein oder sie können diese umfassen. Entsprechende Einstellungen kann der Nutzer vornehmen.

Das Authentifizierungsmodul 218 ist dazu eingerichtet, die Planungs- und/oder Genehmigungsdaten lückenlos nachvollziehbar und manipulationssicher bereit zu stellen.

Dazu wird bei dem Ausführungsbeispiel ein DLT-Verfahren, insbesondere ein Blockchain-Verfahren, angewandt, mittels dessen die Erzeugung und das Ändern der bereitgestellten Daten kryptografisch dokumentiert wird. Bei weiteren Ausführungsbeispielen können alternativ oder zusätzlich andere Verfahren zum Einsatz kommen, wobei vor allem verschiedene DLT-Verfahren zum Einsatz kommen können.

Die Schnittstelle 220 des Systems 200 dient zum Aufbau einer datentechnischen Verbindung zu der Genehmigungsbehörde 300. Dabei ist die Schnittstelle 220 derart beschaffen, dass sie einen sicheren Austausch von Daten betreffend des Gebäudes und/oder der Bestandteile des Gebäudes ermöglicht. Bei dem Ausführungsbeispiel werden kryptografische Verfahren dazu genutzt, ein unbefugtes Lesen der übertragenen Daten zu verhindern und die übertragenen Daten zu signieren, sodass unbefugte Änderungen unterbunden werden.

Das Energienachweiserzeugungsmodul 222 ist dazu eingerichtet, automatisch einen Energienachweis für das Gebäude auf Grundlage der vom Berechnungsmodul 216 berechneten und/oder bereitgestellten Daten zu erstellen.

Das Energieverbrauchsberechnungsmodul 224 ist dazu eingerichtet, den Energieverbrauch des Gebäudes zu berechnen, insbesondere unter Einbeziehung der Daten betreffend das Gebäude und/oder Bestandteile des Gebäudes.

Das Konstruktionsmodul 226 dient zur Konstruktion des Gebäudes und/oder seiner Bestandteile. Bei einem weiteren Ausführungsbeispiel ist das Konstruktionsmodul 226 nicht von dem System 200 umfasst, sondern es ist auf einer externen Recheneinheit implementiert und das System 200 ist mit dem Konstruktionsmodul 226 verbindbar.

Das Plausibilitätsmodul 228 ist dazu eingerichtet, die durch das Berechnungsmoduls 214 berechneten Daten auf der Grundlage von Plausibilitätsdaten, die im Plausibilitätsmodul 228 eingespeichert sind, auf Plausibilität zu überprüfen.

Das Plausibilitätsmodul 228 ist bei dem Ausführungsbeispiel selbstlernend ausgebildet.

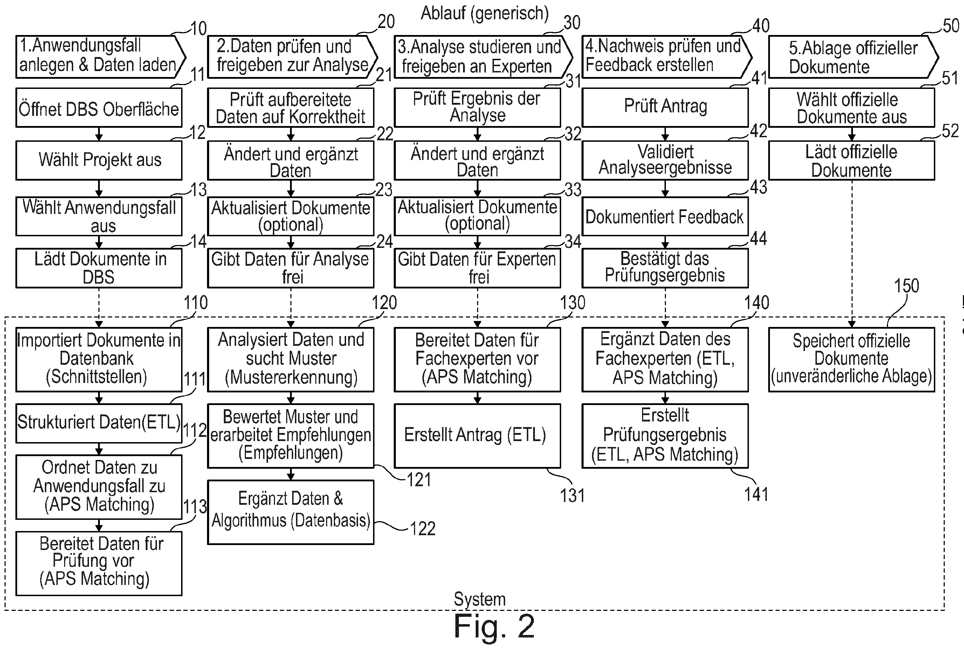

Mit Bezug zu **Fig. 2** wird ein weiteres Ausführungsbeispiel des Verfahrens zum Betreiben des Systems erläutert. Dabei wird von einem Ausführungsbeispiel des Systems 200 ausgegangen, das analog zu dem oben mit Bezug zu **Fig. 1** erläuterten System 100 ausgebildet ist. Die in **Fig. 1** verwendeten Bezugszeichen werden auch hier verwendet, um auf analog ausgebildete Module und Elemente zu verweisen.

Dieses Ausführungsbeispiel beschreibt das Verfahren in einer eher generischen Weise. Die in der ersten Zeile des Diagramms gezeigten Schritte 10 bis 50 bezeichnen Stufen des Verfahrensablaufs, während die darunter gezeigten Schritte 110 bis 150 einzelne Unter-Abschnitte des Verfahrens bezeichnen.

Das System 100 ist durch eine gestrichelte Linie angedeutet um zu zeigen, welche Schritte in dem System 100 im engeren Sinne ausgeführt werden. Insbesondere werden die im Bereich des Systems 100 gezeigten Schritte 110 bis 150 zumindest teilweise automatisiert ausgeführt.

Sämtliche Schritte werden bei dem Ausführungsbeispiel elektronisch ausgeführt. Insbesondere wird einem Nutzer dabei eine Bedienoberfläche bereitgestellt, mittels derer Eingaben erfasst und/oder der Ablauf des Verfahrens gesteuert werden kann.

Insbesondere wird bei dem Ausführungsbeispiel ein *"Digital Building System"* (DBS) implementiert.

In einer ersten Stufe 10 "Anwendungsfall anlegen & Daten laden" des Verfahrens wird ein Anwendungsfall angelegt und es werden die dafür relevanten Daten geladen.

In einem Schritt 11 "Öffnet DBS Oberfläche" wird eine Bedienoberfläche geöffnet.

In einem Schritt 12 "Wählt Projekt aus" wird ein Projekt ausgewählt.

In einem Schritt 13 "Wählt Anwendungsfall aus" wird ein Anwendungsfall ausgewählt.

In einem Schritt 14 "Lädt Dokumente in DBS" werden Dokumente geladen.

In einem Schritt 110 "Importiert Dokumente in Datenbank (*Schnittstellen*)" importiert das System Dokumente in eine Datenbank. Hierfür sind insbesondere Schnittstellen vorgesehen, etwa zu der Datenbank und zu einer Eingabevorrichtung.

In einem Schritt 111 "Strukturiert Daten (*ETL*)" werden die vorliegenden Daten, insbesondere Daten betreffend das Gebäude und/oder Bestandteile des Gebäudes, strukturiert, wobei insbesondere ein Verfahren der Struktur *"Extract, Transform, Load"* (ETL) durchgeführt wird, wie oben bereits erläutert.

In einem Schritt 112 "Ordnet Daten zu Anwendungsfall zu (*APS Matching*)" werden die relevanten Daten dem Anwendungsfall zugeordnet, insbesondere mittels eines Verfahrens zum *"APS Matching",* wie oben bereits erläutert.

In einem Schritt 113 "Bereitet Daten für Prüfung vor (*APS Matching*)" werden die Daten für eine Prüfung vorbereitet, wobei ebenfalls das oben beschriebene *"APS Matching"* durchgeführt wird.

In einer zweiten Stufe 20 "Daten prüfen und freigeben zur Analyse" werden die vorliegenden Daten geprüft und zur Analyse freigegeben.

In einem Schritt 21 "Prüft aufbereitete Daten auf Korrektheit" werden die in der ersten Stufe 10 aufbereiteten Daten auf Korrektheit geprüft.

In einem Schritt 22 "Ändert und ergänzt Daten" werden die Daten gegebenenfalls geändert und/oder ergänzt.

In einem optionalen Schritt 23 "Aktualisiert Dokumente (optional)" werden vorliegende Daten und Dokumente aktualisiert.

In einem Schritt 24 "Gibt Daten für Analyse frei" werden die Daten für eine Analyse freigegeben.

In einem Schritt 120 "Analysiert Daten und sucht Muster (*Mustererkennung*)" werden die Daten mittels eines Mustererkennungsverfahrens analysiert und Muster werden gesucht.

In einem Schritt 121 "Bewertet Muster und erarbeitet Empfehlungen (*Empfehlungen*)" werden die ermittelten Muster bewertet und es werden Empfehlungen erzeugt und ausgegeben.

In einem Schritt 122 "Ergänzt Daten & Algorithmus (*Datenbasis*)" werden die Daten ergänzt und es wird ein Algorithmus verwendet, mittels dessen als Datenbasis ein geeigneter Datenspeicher für die historisierte Ablage aller für die AI-Services benötigten Daten zur Verfügung gestellt wird.

In einer weiteren Stufe 30 "Analyse studieren und freigeben an Experten" wird die Analyse untersucht und für einen Experten freigegeben.

Ein "Experte" beziehungsweise "Fachexperte" ist dabei insbesondere eine qualifizierte Person, etwa ein Bauingenieur oder Architekt, der zur Vornahme bestimmter Änderungen der Daten und/oder zum Erzeugen bestimmter Daten und/oder zum Ausstellen einer Genehmigung, eines Nachweises oder eines ähnlichen Dokuments berechtigt ist. Der Experte kann ferner eine autorisierte Organisation, Einheit oder Behörde sein. Bei dem Ausführungsbeispiel ist ein Authentifizierungsschritt vorgesehen, bei dem ein Nutzer seine Authentifizierung nachweisen muss, etwa bei einem Login-Vorgang.

In einem Schritt 31 "Prüft Ergebnis der Analyse" wird das Ergebnis der zuvor durchgeführten Analyse geprüft.

In einem Schritt 32 "Ändert und ergänzt Daten" werden die Daten gegebenenfalls geändert und/oder ergänzt.

In einem optionalen Schritt 33 "Aktualisiert Dokumente (optional)" werden vorliegende Daten und Dokumente aktualisiert.

In einem Schritt 34 "Gibt Daten für Experten frei" werden dann die Daten für einen Experten freigegeben.

In einem Schritt 130 "Bereitet Daten für Fachexperten vor (*APS Matching*)" werden die nun vorliegenden Daten für einen Fachexperten vorbereitet, wobei wiederum ein *"APS Matching"* angewandt wird, wie oben bereits erläutert.

In einem Schritt 131 "Erstellt Antrag (*ETL*)" wird ein Antrag erstellt, wobei ein ETL-Verfahren wie oben erläutert genutzt wird.

In einer weiteren Stufe 40 "Nachweis prüfen und Feedback erstellen" wird der Nachweis geprüft und es wird eine Rückmeldung erzeugt und ausgegeben.

In einem Schritt 41 "Prüft Antrag" wird der zuvor erstellte Antrag geprüft.

In einem Schritt 42 "Validiert Analyseergebnisse" werden die Analyseergebnisse validiert.

In einem Schritt 43 "Dokumentiert Feedback" wird eine Rückmeldung beziehungsweise ein Feedback erzeugt und dokumentiert.

In einem Schritt 44 "Bestätigt das Prüfungsergebnis" wird das Prüfungsergebnis bestätigt.

In einem Schritt 140 "Ergänzt Daten des Fachexperten (*ETL, APS Matching*)" werden die von dem Fachexperten bereitgestellten und/oder ergänzten Daten ergänzt, wobei insbesondere Verfahren des ETL und/oder *"APS Matching"* genutzt werden, wie bereits oben erläutert.

In einem Schritt 141 "Erstellt Prüfungsergebnis (*ETL, APS Matching*)" wird das Prüfungsergebnis dokumentiert und kann insbesondere erstellt und ausgegeben werden, wobei auch hier insbesondere Verfahren des ETL und/oder *"APS Matching"* genutzt werden, wie bereits oben erläutert.

In einer weiteren Stufe 50 "Ablage offizieller Dokumente" erfolgt eine Ablage der offiziellen Dokumente, wobei insbesondere eine sichere Ablage erfolgt, bei der Änderungen an Dateien nicht unbefugt vorgenommen werden können und/oder wobei Änderungen stets dokumentiert werden.

In einem Schritt 51 "Wählt offizielle Dokumente aus" werden offizielle Dokumente ausgewählt.

In einem Schritt 52 "Lädt offizielle Dokumente" werden die ausgewählten offiziellen Dokumente geladen.

In einem Schritt 150 "Speichert offizielle Dokumente (*unveränderliche Ablage*)" werden die offiziellen Dokumente gespeichert, wobei die oben erläuterten Verfahren einer unveränderlichen Ablage angewandt werden.

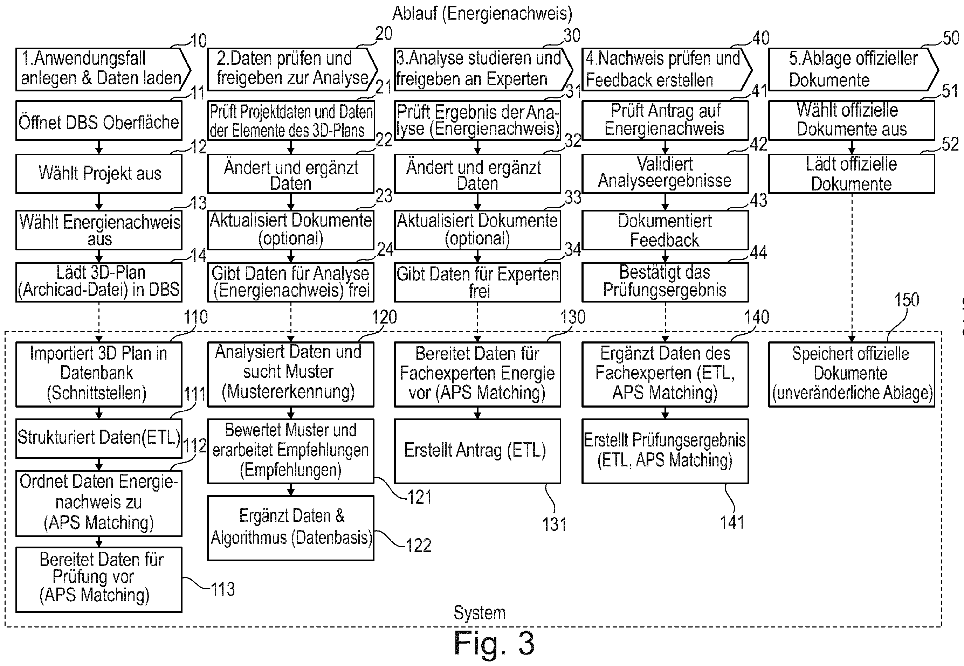

Nachfolgend wird anhand der **Fig. 3** ein weiteres Ausführungsbeispiel des Verfahrens zum Betreiben des Systems erläutert. Dieses weitere Ausführungsbeispiel beschreibt das oben mit Bezug zu Fig. 2 erläuterte Verfahren konkreter für das Beispiel der Erstellung eines Energienachweises für ein Gebäude. Dieses Ausführungsbeispiel ist eine konkretere Variante des oben bereits mit Bezug zu **Fig. 2** erläuterten Ausführungsbeispiels des Verfahrens. Aus diesem Grund werden die gleichen Bezugszeichen für einzelne Stufen und Schritte verwendet.

In einer ersten Stufe 10 "Anwendungsfall anlegen & Daten laden" des Verfahrens wird ein Anwendungsfall angelegt und es werden die dafür relevanten Daten geladen.

In einem Schritt 11 "Öffnet DBS Oberfläche" wird eine Bedienoberfläche geöffnet.

In einem Schritt 12 "Wählt Projekt aus" wird ein Projekt ausgewählt.

In einem Schritt 13 "Wählt Energienachweis aus" wird ein Anwendungsfall ausgewählt. In diesem Fall ist der Anwendungsfall ein Energienachweis.

In einem Schritt 14 "Lädt 3D-Plan (Archicad-Datei) in DBS" werden Dokumente geladen. Konkret umfassen die Dokumente hier einen 3D-Plan eines Gebäudes oder eines Teils des Gebäudes.

In einem Schritt 110 "Importiert 3D-Plan in Datenbank (*Schnittstellen*)" importiert das System die geladenen Dokumente, insbesondere also den 3D-Plan, in eine Datenbank. Hierfür sind insbesondere Schnittstellen vorgesehen, etwa zu der Datenbank und zu einer Eingabevorrichtung. Bei diesem Ausführungsbeispiel wird etwa eine Schnittstelle zu einem Konstruktionsmodul genutzt, in dem der 3D-Plan erstellt wurde.

In einem Schritt 111 "Strukturiert Daten (*ETL*)" werden die vorliegenden Daten, insbesondere Daten betreffend das Gebäude und/oder Bestandteile des Gebäudes, strukturiert, wobei insbesondere ein Verfahren der Struktur *"Extract, Transform, Load"* (ETL) durchgeführt wird, wie oben bereits erläutert.

In einem Schritt 112 "Ordnet Daten Energienachweis zu *(APS Matching)"* werden die relevanten Daten dem Anwendungsfall des Energienachweises zugeordnet, insbesondere mittels eines Verfahrens zum *"APS Matching",* wie oben bereits erläutert.

In einem Schritt 113 "Bereitet Daten für Prüfung vor (*APS Matching*)" werden die Daten für eine Prüfung vorbereitet, wobei ebenfalls das oben beschriebene *"APS Matching"* durchgeführt wird.

In einer zweiten Stufe 20 "Daten prüfen und freigeben zur Analyse" werden die vorliegenden Daten geprüft und zur Analyse freigegeben.

In einem Schritt 21 "Prüft Projektdaten und Daten der Elemente des 3D-Plans" werden die in der ersten Stufe 10 aufbereiteten Projektdaten und Daten der Elemente des 3D-Plans geprüft.

In einem Schritt 22 "Ändert und ergänzt Daten" werden die Daten gegebenenfalls geändert und/oder ergänzt.

In einem optionalen Schritt 23 "Aktualisiert Dokumente (optional)" werden vorliegende Daten und Dokumente aktualisiert, insbesondere also die Daten des 3D-Plans.

In einem Schritt 24 "Gibt Daten für Analyse (Energienachweis) frei" werden die Daten für eine Analyse freigegeben, wobei die Analyse hinsichtlich des Energienachweises auszuführen ist.

In einem Schritt 120 "Analysiert Daten und sucht Muster *(Mustererkennung)"* werden die Daten mittels eines Mustererkennungsverfahrens analysiert und Muster werden gesucht.

In einem Schritt 121 "Bewertet Muster und erarbeitet Empfehlungen *(Empfehlungen)*" werden die ermittelten Muster bewertet und es werden Empfehlungen erzeugt und ausgegeben.

In einem Schritt 122 "Ergänzt Daten und Algorithmus *(Datenbasis)*" werden die Daten ergänzt und es wird ein Algorithmus verwendet, mittels dessen als Datenbasis ein geeigneter Datenspeicher für die historisierte Ablage aller für die AI-Services benötigten Daten zur Verfügung gestellt wird.

In einer weiteren Stufe 30 "Analyse studieren und freigeben an Experten" wird die Analyse untersucht und für einen Experten freigegeben.

Ein Experte ist dabei insbesondere eine qualifizierte Person, etwa ein Bauingenieur oder Architekt, der zur Vornahme bestimmter Änderungen der Daten berechtigt ist. Bei dem Ausführungsbeispiel ist ein Authentifizierungsschritt vorgesehen, bei dem ein Nutzer seine Authentifizierung nachweisen muss, etwa bei einem Login-Vorgang.

In einem Schritt 31 "Prüft Ergebnis der Analyse (Energienachweis)" wird das Ergebnis der zuvor durchgeführte Analyse hinsichtlich des Energienachweises geprüft.

In einem Schritt 32 "Ändert und ergänzt Daten" werden die Daten gegebenenfalls geändert und/oder ergänzt.

In einem optionalen Schritt 33 "Aktualisiert Dokumente (optional)" werden vorliegende Daten und Dokumente aktualisiert, insbesondere also die Daten des 3D-Plans.

In einem Schritt 34 "Gibt Daten für Experten frei" werden dann die Daten für einen Experten freigegeben.

In einem Schritt 130 "Bereitet Daten für Fachexperten Energie vor *(APS Matching)"* werden die nun vorliegenden Daten für einen Fachexperten vorbereitet, wobei wiederum ein *"APS Matching"* angewandt wird, wie oben bereits erläutert. Der Fachexperte ist insbesondere berechtigt, im Bereich der Energie und des Energienachweises Prüfungen vorzunehmen.

In einem Schritt 131 "Erstellt Antrag *(ETL)*" wird ein Antrag erstellt, wobei ein ETL-Verfahren wie oben erläutert genutzt wird.

In einer weiteren Stufe 40 "Nachweis prüfen und Feedback erstellen" werden Nachweise geprüft und es wird eine Rückmeldung erzeugt und ausgegeben.

In einem Schritt 41 "Prüft Antrag auf Energienachweis" wird der zuvor erstellte Antrag auf einen Energienachweis geprüft.

In einem Schritt 42 "Validiert Analyseergebnisse" werden die Analyseergebnisse validiert.

In einem Schritt 43 "Dokumentiert Feedback" wird eine Rückmeldung beziehungsweise ein Feedback erzeugt und dokumentiert.

In einem Schritt 44 "Bestätigt das Prüfungsergebnis" wird das Prüfungsergebnis bestätigt.

In einem Schritt 140 "Ergänzt Daten des Fachexperten *(ETL, APS Matching)*" werden die von dem Fachexperten bereitgestellten und/oder ergänzten Daten ergänzt, wobei insbesondere Verfahren des ETL und/oder *"APS Matching"* genutzt werden, wie bereits oben erläutert.

In einem Schritt 141 "Erstellt Prüfungsergebnis *(ETL, APS Matching)*" wird das Prüfungsergebnis dokumentiert und kann erstellt und ausgegeben werden, wobei auch hier insbesondere Verfahren des ETL und/oder *"APS Matching"* genutzt werden, wie bereits oben erläutert.

In einer weiteren Stufe 50 "Ablage offizieller Dokumente" erfolgt eine Ablage der offiziellen Dokumente, wobei insbesondere eine sichere Ablage erfolgt, bei der Änderungen an Dateien nicht unbefugt vorgenommen werden können und/oder wobei Änderungen stets dokumentiert werden.

In einem Schritt 51 "Wählt offizielle Dokumente aus" werden offizielle Dokumente ausgewählt.

In einem Schritt 52 "Lädt offizielle Dokumente" werden die ausgewählten offiziellen Dokumente geladen.

In einem Schritt 150 "Speichert offizielle Dokumente *(unveränderliche Ablage)*" werden die offiziellen Dokumente gespeichert, wobei die oben erläuterten Verfahren einer unveränderlichen Ablage angewandt werden.

In weiteren Ausführungsbeispielen kann eine Analyse hinsichtlich anderer Aspekte des Planungs- und/oder Genehmigungsverfahrens durchgeführt werden, beispielsweise hinsichtlich der Sicherheit im Brandfall.

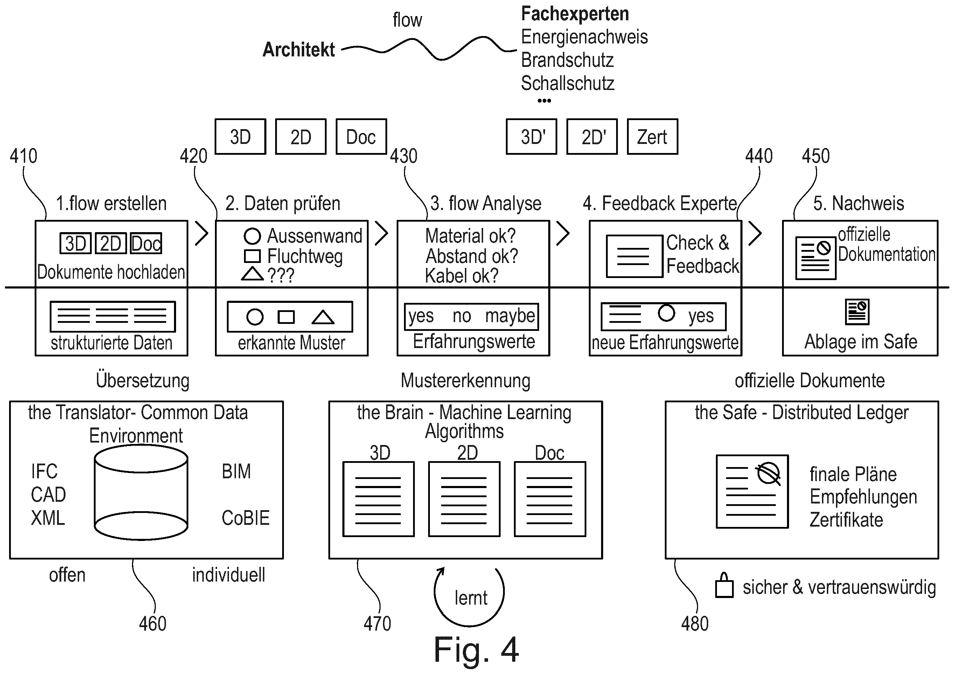

Mit Bezug zu **Fig. 4** wird ein weiteres Ausführungsbeispiel des Systems und des Verfahrens zu seinem Betrieb erläutert. Die Struktur dieses weiteren Ausführungsbeispiels ist im Wesentlichen ähnlich wie bereits oben beschrieben. Es wird daher darauf verzichtet, sämtliche analog ausgebildeten Elemente erneut im Detail zu beschreiben.

Das System und das Verfahren zu seinem Betrieb können bei diesem weiteren Ausführungsbeispiel für eine Vielzahl verschiedener Zwecke genutzt werden. Insbesondere ist als Nutzer ein Architekt vorgesehen, der mit der Planung des Gebäudes oder Gebäudeteils betraut ist und der die Einholung verschiedener Genehmigungen und Nachweise organisiert. Andererseits sind Fachexperten vorgesehen, entweder als Nutzer oder als über Schnittstellen des Systems zugängliche externe Stellen.

Das System kann genutzt werden, um einen Energienachweis zu beantragen.

Es kann genutzt werden, um eine Genehmigung betreffend Vorschriften zum Brandschutz zu beantragen.

Es kann genutzt werden, um eine Genehmigung betreffend Vorschriften zum Schallschutz zu beantragen.

Entsprechend kann ein Fachexperte vorgesehen sein, der für die jeweilige Nutzung des Systems qualifiziert ist, etwa ein Fachexperte im Bereich des Energienachweises, des Brandschutzes und/oder des Schallschutzes.

In einem ersten Schritt 410 "flow erstellen" wird ein Projekt begonnen. Es werden Dokumente hochgeladen.

Durch das System werden anhand der hochgeladenen Daten strukturierte Daten erzeugt.

Die hochgeladenen Daten umfassen insbesondere Dokumente.

Die Dokumente können beispielsweise 3D- und/oder 2D-Konstruktionsdaten umfassen und/oder sie können weitere Dokumente umfassen.

Die strukturierten Daten werden insbesondere gespeichert.

In einem weiteren Schritt 420 "Daten prüfen" erfolgt eine Prüfung der vorliegenden Daten.

Durch das System werden in diesem Schritt 420 Muster erkannt. Beispielsweise wird eine Außenwand und/oder ein Fluchtweg erkannt.

Daten über die erkannten Muster werden insbesondere gespeichert.

In einem weiteren Schritt 430 "flow Analyse" werden verschiedene Prüfungen der Daten vorgenommen und die Daten werden analysiert.

Beispielsweise wird eine Eignung und/oder Zulässigkeit eines Materials geprüft, es wird ein Abstandswert geprüft und/oder es wird ein Kabel geprüft.

Das System führt die Analyse beispielsweise anhand von Erfahrungswerten durch und ordnet verschiedenen Prüfparametern einen Wert zu, etwa "ja", "nein" oder "vielleicht".

In einem weiteren Schritt 440 "Feedback Experte" erfolgt ein Check und Feedback.

Dieser Schritt wird insbesondere zumindest teilweise durch einen Fachexperten ausgeführt, der dem Anwendungsfall entsprechend qualifiziert ist.

Das System generiert anhand des Feedbacks insbesondere neue Erfahrungswerte, die beispielsweise bei einer weiteren Verwendung des Systems im Schritt 430 zur Analyse genutzt werden können. Beim Generieren neuer Erfahrungswerte kann insbesondere ein Verfahren aus dem Bereich der künstlichen Intelligenz (KI, artificial intelligence, AI) genutzt werden.

In einem weiteren Schritt 450 "Nachweis" wird eine offizielle Dokumentation erzeugt.

Das System führt insbesondere eine Ablage in einem Safe durch. Dabei kann beispielsweise mittels eines kryptografischen oder Blockchain-Verfahrens eine sichere digitale Ablage erfolgen. Alternativ oder zusätzlich können weitre Verfahren angewandt werden, etwa aus dem Bereich der Distributed-Ledger-Technologie.

Denkbar ist beispielsweise auch, ein privates DLT-Verfahren zu verwenden, um bestimmte Informationen nicht zugänglich machen zu müssen. Außerdem können so Kosten für Dritte z.B. für das Mining eingespart werden.

Grundsätzlich ist auch denkbar, auf ein öffentliches DLT-Verfahren zurückzugreifen und dieses zu verwenden.

Es ist auch möglich, dass sowohl private DLT-Verfahren als auch öffentliche DLT-Verfahren verwendet werden.

Das System weist mehrere Module 460, 470, 480 auf, die unter anderem zur Ausführung des Verfahrens zum Betreiben des Systems genutzt werden.

Ein Modul 460 "Übersetzung" umfasst insbesondere eine Einheit, die als *"the Translator - Common Data Environment* beschrieben wird. Dieses Modul 460 stellt eine Kompatibilität verschiedener Datenformate mit dem System sicher. Es kann beispielsweise dazu ausgerichtet sein, ein bestimmtes Datenformat in ein bestimmtes anderes Datenformat zu konvertieren.

Verschiedene von dem Übersetzungsmodul 460 umfasste Protokolle, Standards und/oder Verfahren umfassen IFC, CAD, XML, BIM, CoBIE.

Das Übersetzungsmodul 460 ist dazu ausgebildet eine Offenheit und individuelle Nutzbarkeit des Systems zu gewährleisten.

Ein Modul 470 "Mustererkennung" umfasst insbesondere eine Einheit, die als *"the Brain - Machine Learning Algorithm"* beschrieben wird. Dieses Modul 470 ist dazu eingerichtet, ein Maschinenlernverfahren anhand von 2D-, 3D- und/oder weiteren Dokumenten auszuführen. Es kann beispielsweise eine neuronales Netz und/oder ein anderes Verfahren genutzt werden.

Das Mustererkennungsmodul 470 wird insbesondere zur Mustererkennung anhand der hochgeladenen Daten in Schritt 420 genutzt.

Das Mustererkennungsmodul 470 kann insbesondere zu einer iterativen Durchführung des Maschinenlernprozesses ausgebildet sein.

Ein Modul 480 "offizielle Dokumente" umfasst insbesondere eine Einheit, die als *"the* Safe - *Distributed Ledger"* beschrieben wird. Dieses Modul 480 ist dazu eingerichtet, finale Pläne, Empfehlungen und/oder Zertifikate sicher und vertrauenswürdig zu dokumentieren und/oder abzulegen.

Dabei ist das Modul 480 insbesondere dazu eingerichtet, die Sicherheit und Vertrauenswürdigkeit mittels eines Blockchain-Verfahrens zu gewährleisten. Bei weiteren Ausführungen können auch weitere Verfahren genutzt werden, etwa aus dem Bereich der DLT-Verfahren.

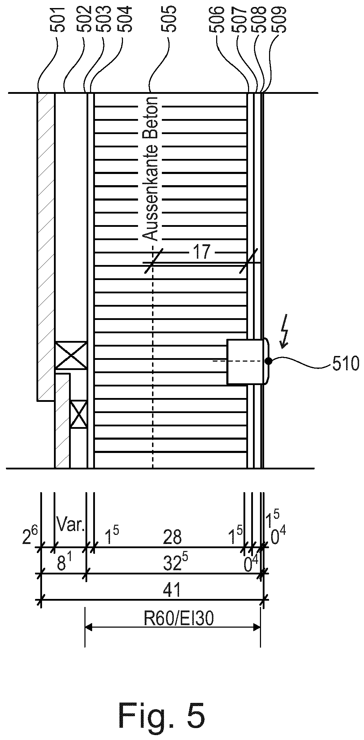

Mit Bezug zu **Fig. 5** wird ein Ausführungsbeispiel einer mittels des Systems ausgeführten Mustererkennung (pattern recognition) erläutert.

Bei diesem Ausführungsbeispiel wird die Struktur eines Teils einer Wand erkannt.

Bei dem hier gezeigten Beispiel eine Analyse der Mustererkennung werden Skizzen und/oder Konstruktionsdaten auf bekannte Elemente, Module oder Produkte des APS geprüft. Textdaten werden auf bekannte Informationen geprüft. Es wird ein Ergebnis der Mustererkennung gebildet und das Ergebnis wird den strukturierten Daten zugeordnet. Beispielsweise wird dabei die Analyse anhand von strukturierten Daten aus einer CAD-Software ausgeführt.

Bei dem Beispiel umfasst das Ergebnis der Mustererkennung Informationen über ein Wandmodul Typ "Holzbau mittel", über verwendete Materialien, etwa eine Schalung vertikal, Lattung horizontal, Windpapier vollflächig, Gipsfaserplatte, Ständer, Gipsfaserplatte, LDS, Gipskartonplatte sowie Verspachtelung. Ferner wird eine Beton-Außenkante erkannt.

Die erkannten Elemente 501 bis 510 sind in Fig. 5 als die folgenden Elemente identifiziert:
- eine Schalung 501 des Typs "Schalung vertikal N+K, 26 mm, Fichte/Tanne sägeroh, überhoben, sichtbar geschraubt, Endbeschichtung 2x Impralan D400 Outback",
- eine Lattung 502 des Typs "Lattung horizontal 30-55/50, 30-55 mm",
- Windpapier 503 vollflächig,
- Gipsfaserplatte 504 15 mm,
- Ständer 505 des Typs "Ständer C24 60-100/280 (gem. Statik), a=625 mm, Dämmung MF (RF1), >26 kg/kg/m³, >1000°C, <0.036 W/mK",
- Gipsfaserplatte 506 15 mm,
- LDS 507 mit einer vollflächigen Folie, Sd=20m
- Gipskartonplatte 508 des Typs "Typ F (RF1), 15 mm",
- Verspachtelung 509 4 mm sowie
- eine Elektrodose 510, örtlich in Dampfbremse eingepackt.

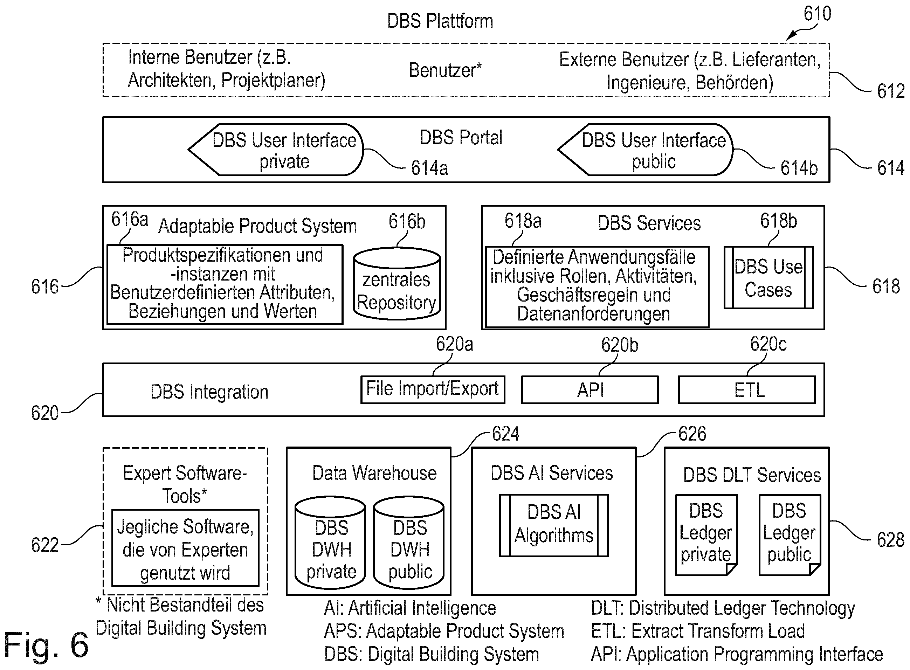

Mit Bezug zu **Fig. 6** wird ein weiteres Ausführungsbeispiel des Systems und des Verfahrens zu seinem Betrieb erläutert. Verschiedene Elemente sind analog zu den bereits oben erläuterten Elementen ausgebildet und werden daher nicht erneut in der gleichen Detailtiefe erläutert.

Bei dem Ausführungsbeispiel ist eine DBS Plattform 610 implementiert, die verschiedene Ebenen beziehungsweise Schichten und Module umfasst, die nachfolgend weiter erläutert werden.

Eine Ebene betrifft die Benutzer 612 der DBS Plattform 610. Es können insbesondere interne Benutzer vorgesehen sein, wie zum Beispiel Architekten, Projektplaner und ähnliches. Es können insbesondere externe Benutzer vorgesehen sein, wie zum Beispiel Lieferanten, Ingenieure, Behörden und ähnliches.

Eine weitere Ebene betrifft ein DBS Portal 614.

Das DBS Portal 614 umfasst insbesondere Schnittstellen, etwa ein DBS "User Interface private" 614a und/oder ein DBS "User Interface public" 614b.

Mittels der Schnittstellen 614a, 614b können insbesondere interne und/oder externe Nutzer auf das DBS 610 zugreifen.

Die DBS Plattform 610 umfasst bei dem Beispiel ferner ein Adaptable Product System 616.

Dieses umfasst bei dem Beispiel Produktspezifikationen und -instanzen 616a, insbesondere Produktspezifikationen und -instanzen mit benutzerdefinierten Attributen, Beziehungen und Werten.

Es umfasst bei dem Beispiel ferner ein zentrales Repository 616b.

Ferner sind bei dem Ausführungsbeispiel DBS Services 618 vorgesehen.

Diese umfassen bei dem Ausführungsbeispiel Anwendungsfälle 618a, insbesondere definierte Anwendungsfälle inklusive Rollen, Aktivitäten, Geschäftsregeln und Datenanforderungen.

Sie umfassen bei dem Beispiel ferner DBS Use Cases 618b.

Ferner ist bei dem Ausführungsbeispiel ein Modul zur DBS Integration 620 vorgesehen.

Dieses umfasst bei dem Beispiel Module zum File Import/Export 620a, zu einer API 620b (application programming interface, Programmierschnittstelle) und zu einer ETL 620c (extract, transform, load).

Ferner sind bei dem Ausführungsbeispiel Expert Software-Tools 622 vorgesehen, insbesondere umfassend jegliche Software, die von Experten genutzt wird.

Ferner ist ein "Data Warehouse"-Modul 624. Dieses ermöglicht insbesondere eine zur Analyse optimierte Zusammenführung von Daten aus verschiedenen Quellen.

Bei dem Ausführungsbeispiel ist ferner ein Modul für DBS AI Services 626 vorgesehen, das insbesondere DBS AI Algorithmen umfasst. Dabei können insbesondere verschiedene Verfahren aus dem Bereich des Maschinenlernens und der künstlichen Intelligenz eingesetzt werden.

Bei dem Ausführungsbeispiel ist ferner ein Moduls für DBS DLT Services 628 vorgesehen.

Dieses umfasst insbesondere Module für "DBS Ledger private" und "DBS Ledger public".

Mittels dieses Moduls 628 wird insbesondere ein Verfahren zur Dokumentation von Transaktionen mittels eines Distributed-Ledger-Technologie-Verfahrens implementiert.

Es werden insbesondere öffentliche und private Distributed-Ledger-Techniken bereitgestellt, wobei öffentliche eine Beteiligung und Dateneinsicht durch mehrere Netzwerkteilnehmer erlauben, während dies bei privaten beschränkt wird.

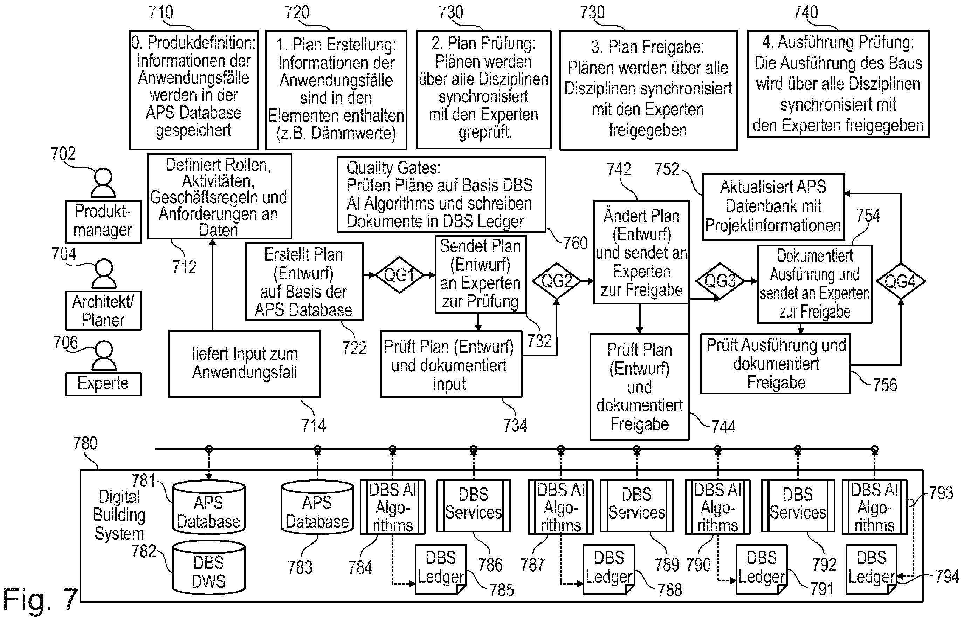

Mit Bezug zu **Fig. 7** wird ein weiteres Ausführungsbeispiel des Systems und des Verfahrens zu seinem Betrieb erläutert. Verschiedene Elemente sind analog zu den bereits oben erläuterten Elementen ausgebildet und werden daher nicht erneut in der gleichen Detailtiefe erläutert.

In der Figur sind verschiedene Ebenen dargestellt, die verschiedenen Nutzern beziehungsweise Schichten von Nutzern zugeordnet sind. Hierdurch werden die Aufgaben verschiedener Nutzer getrennt.

Als Nutzer sind bei dem Ausführungsbeispiel ein Produktmanager 702, ein Architekt/Planer 704 und ein Experte 706 vorgesehen.

In der Figur sind ferner verschiedene Stufen des Verfahrens dargestellt. Ferner ist der Aufbau eines Digital Building System (DBS) 780 für das Ausführungsbeispiel dargestellt und die Zugriffe auf verschiedene Module ist den einzelnen Stufen des Verfahrens zugeordnet.

Bei einer ersten Stufe "Produktdefinition" 710 werden Informationen der Anwendungsfälle in der APS Database gespeichert.

In einem Schritt 712 definiert der Produktmanager 712 Rollen, Aktivitäten, Grundregeln und Anforderungen an Daten.

Hierbei wird in einem Schritt 714 auf der Ebene des Experten 706 Input zum Anwendungsfall bereitgestellt.

Dabei werden in dieser Stufe 710 Daten an eine APS Database 781 übertragen und es wird ein DBS DWH 782 als Data Warehouse-Modul genutzt.

Bei einer weiteren Stufe "Plan Erstellung" 720 sind Informationen der Anwendungsfälle in den Elementen Enthalten, zum Beispiel Dämmwerte.

In einem Schritt 722 wird auf der Ebene des Architekten/Planers 704 auf Basis der APS Database ein Plan als Entwurf erstellt.

Bei dieser Stufe 720 werden Daten von der APS Database 783 bereitgestellt.

In einer weiteren Stufe "Plan Prüfung" 730 werden Pläne über alle Disziplinen synchronisiert und mit den Experten geprüft.

Beim Übergang von dem Schritt 722 der Planerstellung zu einem Schritt 732 ist ein "Quality Gate" 760 vorgesehen, abgekürzt dargestellt als "QG1". Dabei werden Pläne auf Basis von DBS AI Algorithmus geprüft und Dokumente werden in DBS Ledger geschrieben.

Bei einem "Quality Gate" 760 als Schritt werden DBS AI Algorithmus 784 genutzt, um ein Verfahren der künstlichen Intelligenz oder des Maschinenlernens zu nutzen. Ferner wird ein Modul als DBS Ledger 785 verwendet.

Das heißt, bei dem Beispiel erfolgt die Prüfung der Pläne mittels eines Verfahrens der künstlichen Intelligenz beziehungsweise des Maschinenlernens. Ferner werden die Dokumente mittels eines Distributed-Ledger-Verfahrens sicher dokumentiert.

Im Schritt 732 (auf der Ebene des Architekten/Planers 704 als Nutzer) wird der überprüfte und dokumentierte Entwurf des Plans zur Prüfung an Experten gesendet.

In einem anschließenden Schritt 734 wird auf der Ebene des Experten 706 der Planentwurf geprüft und ein Input wird dokumentiert.

Bei dieser Stufe 730 wird auf DBS Services 786 als Modul des DBS 780 zugegriffen.

In einer Stufe "Plan Freigabe" 740 werden Pläne wiederum über alle Disziplinen synchronisiert und mit den Experten freigegeben.

Bei einem Übergang von Schritt 734 zu einem Schritt 742 ist wiederum ein "Quality Gate" vorgesehen.

Bei dem "Quality Gate" werden DBS AI Algorithmus 787 genutzt, um ein Verfahren der künstlichen Intelligenz oder des Maschinenlernens zu nutzen. Ferner wird ein Modul als DBS Ledger 788 verwendet.

Der Schritt 742 ist auf derjenigen Ebene vorgesehen, bei welcher der Architekt/Planer 704 als Nutzer fungiert. Bei diesem Schritt 742 wird der Planentwurf geändert und zur Freigabe an Experten geschickt.

Anschließend wird in einem Schritt 744 der Planentwurf auf Ebene des Experten 706 als Nutzer geprüft und eine Freigabe wird gegebenenfalls dokumentiert.

In einer Stufe "Ausführung Prüfung" 750 wird die Ausführung des Baus über alle Disziplinen synchronisiert und mit den Experten freigegeben.

Bei dieser Stufe 740 werden DBS Services 789 genutzt.

Ausgehend von dem oben beschriebenen Schritt 744 erfolgt ein "Quality Gate" und in einem Schritt 754 wird auf der Ebene des Architekten/Planers 704 als Nutzer eine Ausführung dokumentiert und zur Freigabe an einen Experten gesendet.

Bei einem "Quality Gate" als Schritt werden DBS AI Algorithmus 790 genutzt, um ein Verfahren der künstlichen Intelligenz oder des Maschinenlernens zu nutzen. Ferner wird ein Modul als DBS Ledger 791 verwendet.

In einem Schritt 756 wird auf der Ebene des Experten 706 als Nutzer die Ausführung geprüft und eine Freigabe dokumentiert.

Bei der Stufe 750 werden DBS Services 792 genutzt.

Der Übergang zu einem weiteren Schritt 752 auf der Ebene des Produktmanagers 702 als Nutzer erfolgt über einen weiteren "Quality Gate" als Schritt. In dem Schritt 752 wird die APS Datenbank mit Produktinformationen aktualisiert.

Bei dem "Quality Gate" als Schritt werden DBS AI Algorithmus 793 genutzt, um ein Verfahren der künstlichen Intelligenz oder des Maschinenlernens zu nutzen. Ferner wird ein Modul als DBS Ledger 794 verwendet.

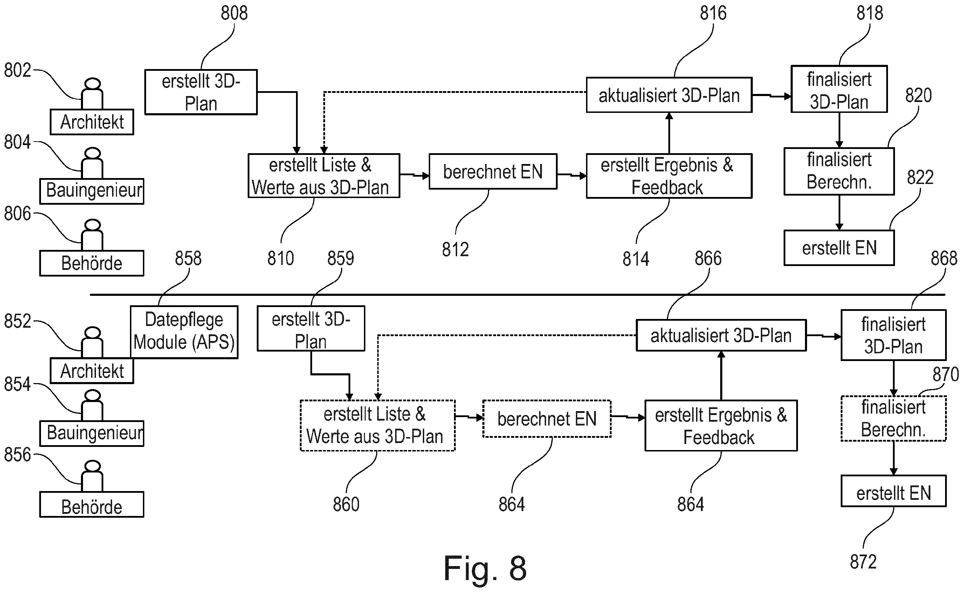

Mit Bezug zu **Fig. 8** wird ein weiteres Ausführungsbeispiel des Systems und des Verfahrens zu seinem Betrieb erläutert. Verschiedene Elemente sind analog zu den bereits oben erläuterten Elementen ausgebildet und werden daher nicht erneut in der gleichen Detailtiefe erläutert.

Es sind zwei verschiedene Abläufe gezeigt, wobei oben der konventionelle Weg des Planungs- und Genehmigungsverfahrens dargestellt ist und unten die Ausführung unter Verwendung des Systems. Dabei werden verschiedene Schritte des Verfahrens von dem System automatisiert, was durch gestrichelte Umrandungen dargestellt ist. Bei dem Beispiel soll ein Energienachweis für ein geplantes Gebäude oder einen Gebäudeteil erstellt werden.

Zunächst wird der obere Fall des nicht automatisierten Verfahrens erläutert.

Es werden drei Nutzerebenen unterschieden. Bei dem Beispiel sind als die verschiedenen Nutzer ein Architekt 802, ein Bauingenieur 804 und eine Behörde 806 vorgesehen.

Durch die Anordnung der Schritte 808 bis 822 wird angedeutet, auf welcher Nutzerebene die Schritte ausgeführt werden.

In einem Schritt 808 wird auf der Ebene des Architekten 802 als Nutzer ein 3D-Plan erstellt.

Anhand der Daten des 3D-Plans werden in einem weiteren Schritt 810 auf der Ebene des Bauingenieurs 804 eine Liste und Werte erstellt.

In einem Schritt 812 auf der gleichen Ebene des Nutzers 804 wird ein Energienachweis berechnet.

In einem weiteren Schritt 814 wird ein Ergebnis erstellt und ein Feedback erzeugt.

In einem Weiteren Schritt 816 - nun wieder auf der Nutzerebene des Architekten 802 - wird der 3D-Plan geändert und in einem iterativen Ablauf kehrt das Verfahren zu dem Schritt 810 zurück.

Gegebenenfalls, das heißt, wenn keine Änderungen des 3D-Plans notwendig sind oder wenn keine Neuberechnung des Energienachweises erfolgen muss, wird in einem Schritt 818 der 3D-Plan finalisiert.

Auf der Ebene des Bauingenieurs 804 als Nutzer werden in einem Schritt 820 die Berechnungen finalisiert.

In einem weiteren Schritt 822 wird dann auf der Ebene der Behörde 806 der Energienachweis erstellt.

Nachfolgend wird der untere Fall des Verfahrens erläutert, wie es anhand des Systems zumindest teilweise automatisiert ausgeführt wird.

Auch in diesem Fall werden drei Nutzerebenen unterschieden. Bei dem Beispiel sind als die verschiedenen Nutzer ein Architekt 852, ein Bauingenieur 854 und eine Behörde 856 vorgesehen.

Durch die Anordnung der Schritte 858 bis 872 wird angedeutet, auf welcher Nutzerebene die Schritte ausgeführt werden.

In einem Schritt 858 auf der Ebene des Architekten 852 als Nutzer erfolgt eine Datenpflege bei verschiedenen Modulen, insbesondere mittels eines APS.

In einem weiteren Schritt 859 wird ein 3D-Plan erstellt, wie bereits oben ausgeführt.

In einem weiteren Schritt 860 werden - automatisiert durch das System, aber auf der Ebene des Bauingenieurs 854 als Nutzer - eine Liste und Werte anhand des 3D-Plans erstellt und in einem Schritt 862 wird der Energienachweis berechnet.

In einem Schritt 864 wird dann ein Ergebnis erstellt und ein Feedback erzeugt, wobei dies bei dem Beispiel durch den Bauingenieur 854 erfolgt.

In einem Schritt 866 wird auf der Ebene des Architekten 852 als Nutzer der 3D-Plan aktualisiert.

Soweit die Änderungen dies nötig machen, wird in einem iterativen Prozess zum Schritt 860 zurückgekehrt.

Gegebenenfalls wird der 3D-Plan in einem Schritt 868 finalisiert.

In einem Schritt 870 werden die Berechnungen für den Energienachweis finalisiert. Dies erfolgt bei dem Beispiel automatisiert durch das System, aber auf der Ebene des Bauingenieurs 854.

In einem weiteren Schritt 872 erstellt die Behörde 856 den Energienachweis.

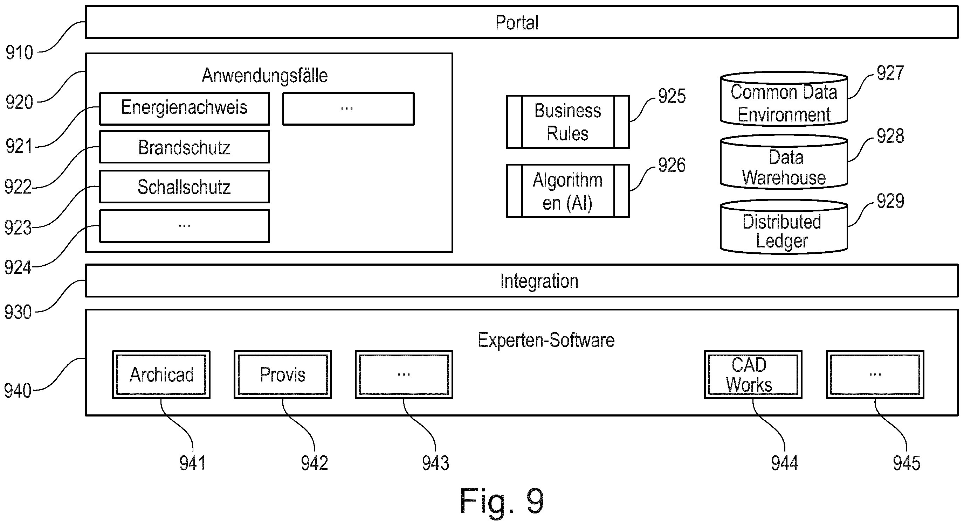

Mit Bezug zu **Fig. 9** wird ein weiteres Ausführungsbeispiel des Systems und des Verfahrens zu seinem Betrieb erläutert. Verschiedene Elemente sind analog zu den bereits oben erläuterten Elementen ausgebildet und werden daher nicht erneut in der gleichen Detailtiefe erläutert.

Es sind verschiedene Ebenen des Systems mit verschiedenen Elementen und Modulen gezeigt, die zur Ausführung des Verfahrens genutzt werden.

Es ist ein Portal 910 vorgesehen, das beispielsweise der Ausbildung einer Bedienoberfläche dient bzw. die durch eine Bedienoberfläche ausgebildet ist, über das auf das System zugegriffen werden kann bzw. das System bedient werden kann.

Auf einer weiteren Ebene ist ein Modul zur Organisation der Anwendungsfälle 920 vorgesehen, die beispielsweise einen Energienachweis 921, den Brandschutz 922, den Schallschutz 923 und/oder weitere Anwendungsfälle 924 umfassen.

Ferner ist ein Modul 925 zur Implementierung von sogenannten Business Rules vorgesehen.

Ferner ist ein Modul 926 zur Implementierung von Algorithmen aus dem Bereich der künstlichen Intelligenz beziehungsweise des Maschinenlernens vorgesehen.

Ferner ist ein Modul 927 zur Implementierung eines sogenannten Common Data Environment vorgesehen.

Ferner ist ein Modul 928 zur Implementierung eines sogenannten Data Warehouse vorgesehen.

Ferner ist ein Modul 929 zur Implementierung eines sogenannten Distributed-Ledger-Verfahrens vorgesehen.

Als eine weitere Ebene ist eine Integrationsebene 930 vorgesehen.

Ferner ist eine Ebene 940 zur Anbindung an Experten-Software vorgesehen. Bei dem Beispiel sind hiervon Module zur Anbindung an Archicad 941, Provis 942, CAD-Works 944 oder andere Experten-Software 943, 945 vorgesehen. In weiteren Ausführungsbeispielen können hier Module für praktisch beliebige Programme vorgesehen sein.

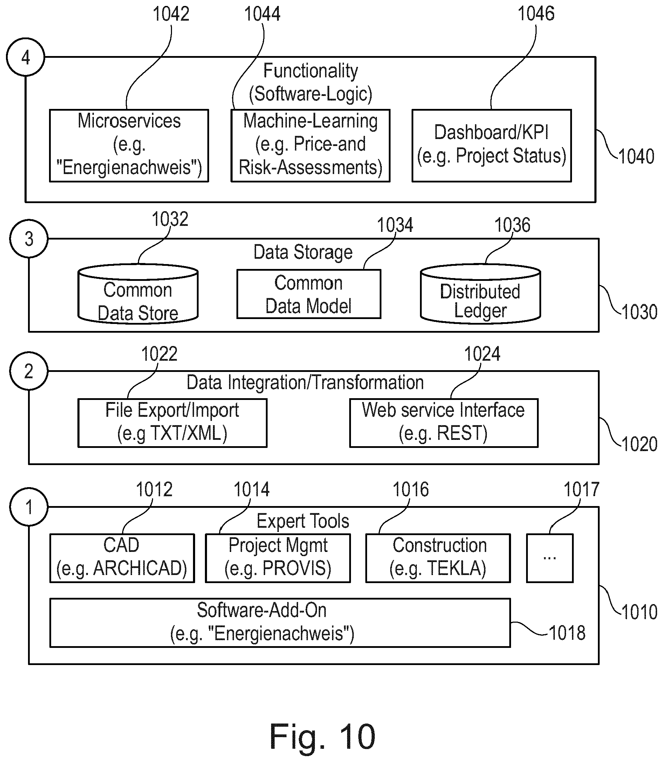

Mit Bezug zu **Fig. 10** wird ein weiteres Ausführungsbeispiel des Systems und des Verfahrens zu seinem Betrieb erläutert. Verschiedene Elemente sind analog zu den bereits oben erläuterten Elementen ausgebildet und werden daher nicht erneut in der gleichen Detailtiefe erläutert.

Es sind verschiedene Ebenen des Systems mit verschiedenen Elementen und Modulen gezeigt, die zur Ausführung des Verfahrens genutzt werden. Insbesondere werden dabei Kernkomponenten eines Ausführungsbeispiels des Systems erläutert.

In einer Ebene 1010 "Expert Tools" sind Module 1012 bis 1018 vorgesehen, die eine Einbindung von Daten verschiedener Software-Programme erlauben, die von verschiedenen Experten genutzt werden. Dieses Software-Programme laufen üblicherweise auf separaten Rechnern. Das Digital Building System (DBS) verwendet Daten dieser Programme.

Bei weiteren Ausführungsbeispielen ist vorgesehen, dass auf die Arbeitsweise dieser Programme Einfluss genommen wird, etwa mittels zusätzlicher Funktionalitäten, die mittels SPAG als sogenanntes "Software-Add-On" bereitgestellt werden.

Bei dem Ausführungsbeispiel sind Module für CAD 1012, etwa ArchiCAD, für Project Management Software 1014, etwa Provis, für Konstruktionssoftware 1016, etwa Tekla, und/oder andere Programme 1017 vorgesehen. Ferner ist ein Software-Add-On 1018 vorgesehen, beispielsweise für einen Energienachweis.

In einer Ebene 1020 "Daten-Integration und -Transformation" sind Module 1022, 1024 vorgesehen, welche die Verwendung von Daten verschiedener Quellen betreffen. Bei dem Beispiel ist ein Modul 1022 für den Export und Import von Daten vorgesehen, etwa in den Dateiformaten TXT und XML, sowie ein Modul 1024 für eine Schnittstelle zu Web-Services, etwa mittels REST.

In dieser Ebene 1020 kann insbesondere eine Datenintegration erfolgen, indem diese von den in der "Expert Tools"-Ebene 1010 vorgesehenen Programmen zumindest teilweise automatisiert eingelesen werden. Dabei ist ein standardisierter Dateitransfer vorgesehen.

In einer Ebene 1030 "Datenspeicherung" sind Module 1032, 1034, 1036 vorgesehen, mittels derer eine sichere Dokumentation und/oder Speicherung der Daten und Dokumente erfolgen kann.

Bei dem Beispiel ist ein Modul 1032 "Common Storage" für eine allgemeine Speicherung von Daten vorgesehen.

Ferner ist bei dem Beispiel ein Modul 1034 "Common Data Model" für eine allgemeine Modellierung der Daten vorgesehen.

Ferner ist bei dem Beispiel ein Modul 1036 "Distributed Ledger" vorgesehen, das die Nutzung einer Dokumentation von Transaktionen mittels Distributed-Ledger-Technologie erlaubt.

Beispielsweise werden Daten entweder in dem allgemeinen Speicher 1032 gespeichert, etwa Preisinformationen, oder mittels eines "Distributed Ledger" 1036, etwa Daten zu einem Energienachweis. Der Speicherort hängt insbesondere davon ab, ob die Speicherung für externe Beteiligte erfolgt und entsprechend gesichert werden muss. Beide Speicherungsformen basieren auf einem gemeinsamen Datenmodell, das insbesondere so gebildet ist, dass interne und externe Partner auf die relevanten und zugänglichen Daten zugriefen können.

In einer Ebene 1040 "Functionality (Software-Logic)" sind Module 1042, 1044, 1046 vorgesehen, die verschiedene Software-Lösungen des Systems verwirklichen.

Insbesondere werden in dieser Ebene 1040 die Kernfunktionalitäten des Systems durch sogenannte Microservices 1042 bereitgestellt, die unabhängig voneinander ausführbar sind. Beispielsweise können Microservices 1042 einen Energienachweis betreffen.

Ein Modul 1044 kann Algorithmen aus dem Bereich der künstlichen Intelligenz oder des Maschinenlernens bereitstellen, etwa zur Bewertung von Preisen und Risiken.

Ein Modul 1046 kann als sogenanntes "Dashboard" oder KPI dienen, etwa um einen Projektstatus zu verwalten. Hierdurch kann etwa auf sogenannte "Key Performance Indicators" zugegriffen werden.

### Bezugszeichen

- 100: System
- 10 bis 52, 110 bis 150: Schritt
- 200: System
- 210: Eingabemodul
- 212: Ausgabemodul
- 214: Servermodul
- 216: Berechnungsmodul
- 218: Authentifizierungsmodul
- 220: Schnittstelle
- 222: Energienachweiserzeugungsmodul
- 224: Energieverbrauchsmodul
- 226: Konstruktionsmodul
- 228: Plausibilitätsmodul
- 300: Genehmigungsbehörde; externer Server
- 410: Schritt
- 420: Schritt
- 430: Schritt
- 440: Schritt
- 450: Schritt
- 460: Modul
- 470: Modul
- 480: Modul
- 501: Element
- 502: Element
- 503: Element
- 504: Element
- 505: Element
- 506: Element
- 507: Element
- 508: Element
- 509: Element
- 510: Element
- 610: DBS Plattform
- 612: Benutzer
- 614: DBS Portal
- 614a: DBS User Interface private
- 614b: DBS User Interface public
- 616: Adaptable Product System
- 616a: Produktspezifikationen und -instanzen
- 616b: zentrales Repository
- 618: DBS Services
- 618a: Anwendungsfälle
- 618b: DBS Use Cases
- 620: DBS Integration
- 620a: File Import/Export
- 620b: API
- 620c: ETL
- 622: Expert Software-Tools
- 624: Data Warehouse
- 626: DBS AI Services
- 628: DBS DLT Services
- 702: Produktmanager
- 704: Architekt/Planer
- 706: Experte
- 710: Produktdefinition
- 712: Schritt
- 714: Schritt
- 720: Planerstellung
- 722: Schritt
- 730: Planprüfung
- 732: Schritt
- 734: Schritt
- 740: Planfreigabe
- 742: Schritt
- 744: Schritt
- 750: Ausführung Prüfung
- 752: Schritt
- 754: Schritt
- 756: Schritt
- 760: Quality Gate
- 780: Digital Building System (DBS)
- 781: APS Database
- 782: DBS DWH
- 783: APS Database
- 784: DBS AI Algorithms
- 785: DBS Ledger
- 786: DBS Services
- 787: DBS AI Algorithms
- 788: DBS Ledger
- 789: DBS Services
- 790: DBS AI Algorithms
- 791: DBS Ledger
- 792: DBS Services
- 793: DBS AI Algorithms
- 794: DBS Ledger
- 802: Architekt
- 804: Bauingenieur
- 806: Behörde
- 808: Schritt
- 810: Schritt
- 812: Schritt
- 814: Schritt
- 816: Schritt
- 818: Schritt
- 820: Schritt
- 822: Schritt
- 910: Portal
- 920: Anwendungsfälle
- 921: Energienachweis
- 922: Brandschutz
- 923: Schallschutz
- 924: weiterer Anwendungsfall
- 925: Business Rules
- 926: Algorithmen (AI)
- 927: Common Data Environment
- 928: Data Warehouse
- 929: Distributed Ledger
- 930: Integration
- 940: Experten-Software
- 941: Archicad
- 942: Provis
- 943: weitere Experten-Software
- 944: CAD Works
- 945: weitere Experten-Software
- 1010: Expert Tools
- 1012: Modul
- 1014: Modul
- 1016: Modul
- 1017: Modul
- 1018: Modul
- 1020: Daten-Integration und -Transformation
- 1022: Modul
- 1024: Modul
- 1030: Datenspeicherung
- 1032: Modul
- 1034: Modul
- 1036: Modul
- 1040: Funktionalität
- 1042: Modul
- 1044: Modul
- 1046: Modul

## Patentansprüche

1. System (100; 200) zur automatisierten Planung und/oder Genehmigung wenigstens eines Gebäudes, aufweisend
- wenigstens ein Eingabemodul (210) zur Eingabe von Daten betreffend das Gebäude und/oder Bestandteile des Gebäudes,
- wenigstens ein Ausgabemodul (212) zur Ausgabe von Daten betreffend das Gebäude und/oder Bestandteile des Gebäudes,
- eine Servereinheit (214), auf der Daten betreffend das Gebäude und/oder die Bestandteile des Gebäudes vorgehalten werden,
- ein Berechnungsmodul (216), das derart beschaffen ist, dass mittels des Berechnungsmoduls (216) Planungs- und/oder Genehmigungsdaten des Gebäudes automatisch berechenbar sind auf der Grundlage von Daten betreffend das Gebäude und/oder die Bestandteile des Gebäudes.

2. System (100; 200) nach Anspruch 1, **dadurch gekennzeichnet, dass** die Planungs- und/oder Genehmigungsdaten Energienachweisdaten des Gebäudes sind oder umfassen.

3. System (100; 200) nach Anspruch 1 oder Anspruch 2, **dadurch gekennzeichnet, dass** das System (100; 200) ein Authentifizierungsmodul (218) aufweist, mittels dessen die Planungs- und/oder Genehmigungsdaten lückenlos nachvollziehbar und manipulationssicher bereitstellbar sind.

4. System (100; 200) nach einem der vorhergehenden Ansprüche, **dadurch gekennzeichnet, dass** das System eine Schnittstelle (220) zu einer Genehmigungsbehörde (300) aufweist, wobei die Schnittstelle (220) derart beschaffen ist, dass sie einen sicheren Austausch von Daten betreffend des Gebäudes und/oder der Bestandteile des Gebäudes ermöglicht.

5. System (100; 200) nach einem der vorhergehenden Ansprüche, **dadurch gekennzeichnet, dass** das System ein Energienachweiserzeugungsmodul (222) aufweist, das derart beschaffen ist, dass es auf der Grundlage der vom Berechnungsmodul (216) berechneten und/oder bereitgestellten Daten einen Energienachweis für das Gebäude automatisch erstellt.

6. System (100; 200) nach einem der vorhergehenden Ansprüche, **dadurch gekennzeichnet, dass** das System (100; 200) wenigstens ein Energieverbrauchsberechnungsmodul (224) aufweist, mittels dessen der Energieverbrauch des Gebäudes berechenbar ist, insbesondere unter Einbeziehung der Daten betreffend das Gebäude und/oder Bestandteile des Gebäudes.

7. System (100; 200) nach einem der vorhergehenden Ansprüche, **dadurch gekennzeichnet, dass** das System (100; 200) wenigstens ein Konstruktionsmodul (226) aufweist oder mit wenigstens einem Konstruktionsmodul (226) verbindbar ist.

8. System (100; 200) nach einem der vorhergehenden Ansprüche, **dadurch gekennzeichnet, dass** das System (100; 200) wenigstens ein Plausibilitätsmodul (228) aufweist, dass die seitens des Berechnungsmoduls (214) berechneten Daten auf Plausibilität überprüft auf der Grundlage von Plausibilitätsdaten, die im Plausibilitätsmodul (228) eingespeichert sind.

9. System (100; 200) nach Anspruch 8, **dadurch gekennzeichnet, dass** das Plausibilitätsmodul (228) selbstlernend ausgebildet ist.

10. Verfahren zum Betrieb eines Systems (100; 200) nach einem der vorhergehenden Ansprüche zur automatisierten und/oder teilautomatisierten Genehmigung und/oder Teilgenehmigung eines Gebäudes.

11. Verwendung eines Systems (100; 200) nach einem der Ansprüche 1 bis 9 zur automatisierten und/oder teilautomatisierten Genehmigung und/oder Teilgenehmigung eines Gebäudes.
